(19) Europäisches Patentamt / European Patent Office / Office européen des brevets

(11) **EP 4 550 735 A1**

(12) **EUROPEAN PATENT APPLICATION**
published in accordance with Art. 153(4) EPC

(43) Date of publication:
07.05.2025 Bulletin 2025/19

(21) Application number: 22948582.6

(22) Date of filing: 30.06.2022

(51) International Patent Classification (IPC):
*H04L 27/00* (2006.01)

(52) Cooperative Patent Classification (CPC):
H04L 27/00

(86) International application number:
PCT/CN2022/103009

(87) International publication number:
WO 2024/000479 (04.01.2024 Gazette 2024/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: GUANGDONG OPPO MOBILE
TELECOMMUNICATIONS
CORP., LTD.
Dongguan, Guangdong 523860 (CN)

(72) Inventors:
• LIU, Wendong
Dongguan, Guangdong 523860 (CN)
• CAO, Jianfei
Dongguan, Guangdong 523860 (CN)

(74) Representative: RGTH
Patentanwälte PartGmbB
Neuer Wall 10
20354 Hamburg (DE)

(54) **WIRELESS COMMUNICATION METHOD, TERMINAL DEVICE AND NETWORK DEVICE**

(57) Provided in the embodiments of the present application are a wireless communication method, a terminal device and a network device, which can realize AI-based beam time domain prediction. The wireless communication method comprises: a network device acquiring a first data set, wherein the first data set comprises identification information of a spatial filter for K1 time units and link quality information of the KI time units, and KI is a positive integer, the network device inputting the first data set into a first network model, so as to output first prediction information, wherein the first prediction information comprises identification information of a spatial filter for FI time units and link quality information of the FI time units, at least one check point is set in the FI time units, and FI is a positive integer, and the network device determining, according to a link quality check result of a first check point, whether to use, within n time units after the first check point, a spatial filter outputted by the first network model, wherein the first check point belongs to the at least one check point, n is a positive integer, and n<FI.

FIG. 8

**Description**

<u>TECHNICAL FIELD</u>

The present disclosure relates to the field of communications, and more particular, to a wireless communication method, a terminal device and a network device.

<u>BACKGROUND</u>

In a new radio (NR) system, a beam management mechanism is introduced. Beam management for downlink includes processes such as downlink beam sweeping, optimal beam reporting at a terminal side, and downlink beam indication at a network side. However, when a terminal device is in a fast-moving scenario, it is necessary to perform beam switching frequently, which triggers beam management processes frequently, resulting in huge overhead and delay.

<u>SUMMARY</u>

Embodiments of the present disclosure provide a wireless communication method, a terminal device and a network device, which can achieve AI-based beam time domain prediction, thereby reducing beam management overhead while ensuring stability of link quality.

In a first aspect, a wireless communication method is provided, and the method includes:

acquiring, by a network device, a first data set, where the first data set includes identification information of spatial filters of K1 time units and link quality information of K1 time units, K1 being a positive integer;

inputting, by the network device, the first data set into a first network model, to output first prediction information, where the first prediction information includes identification information of spatial filters of F1 time units and link quality information of F1 time units, and at least one checkpoint is set within the F1 time units, F1 being a positive integer; and

determining, by the network device according to a link quality check result of a first checkpoint, whether to use spatial filters output by the first network model within n time units after the first checkpoint, where the first checkpoint belongs to the at least one checkpoint, n being a positive integer and n<F1.

In a second aspect, a wireless communication method is provided, and the method includes:

acquiring, by a terminal device, a third data set, where the third data set includes identification information of spatial filters of K3 time units and link quality information of K3 time units, K3 being a positive integer;

inputting, by the terminal device, the third data set into a second network model, to output second prediction information, where the second prediction information includes identification information of spatial filters of F3 time units and link quality information of F3 time units, and at least one checkpoint is set within the F3 time units, F3 being a positive integer; and

determining, by the terminal device according to a link quality check result of a first checkpoint, whether to use spatial filters output by the second network model within n time units after the first checkpoint, where the first checkpoint belongs to the at least one checkpoint, n being a positive integer and n<F3.

In a third aspect, a network device is provided to perform the method in the above first aspect.

Specifically, the network device includes functional modules to perform the method in the above first aspect.

In a fourth aspect, a terminal device is provided to perform the method in the above second aspect.

Specifically, the terminal device includes functional modules to perform the method in the above second aspect.

In a fifth aspect, a network device is provided, which includes a processor and a memory. The memory is configured to store a computer program, and the processor is configured to call the computer program stored in the memory and run the computer program, to cause the network device to perform the method in the above first aspect.

In a sixth aspect, a terminal device is provided, which includes a processor and a memory. The memory is configured to store a computer program, and the processor is configured to call the computer program stored in the memory and run the computer program, to cause the terminal device to perform the method in the above second aspect.

In a seventh aspect, an apparatus is provided to implement the method in any one of the above first to second aspects.

Specifically, the apparatus includes a processor, and the processer is configured to call a computer program from a memory and run the computer program, to cause a device equipped with the apparatus to perform the method in any one of the above first to second aspects.

In an eighth aspect, a computer readable storage medium is provided, which is configured to store a computer program, and the computer program causes a computer to perform the method in any one of the above first to second aspects.

In a ninth aspect, a computer program product is provided, which includes computer program instructions. The computer program instructions cause a computer to perform the method in any one of the above first to second aspects.

In a tenth aspect, a computer program is provided. The computer program, when running on a computer, causes the computer to perform the method the method in any one of the above first to second aspects.

Through the technical solution in the above first aspect, the network device implements time domain prediction of spatial filter based on the first network model, as well as checks predicted spatial filters based on link quality and determines spatial filters to be used by means of spatial filter sweeping within a certain period of time after the check is failed, so as to achieve real-time monitoring on link quality based on AI model prediction, ensure performance of matched spatial filters between the network device and the terminal device. As such, while reducing overhead of spatial filter measurement and feedback required for spatial filter tracking during movement of the terminal device and reducing switching delay between the spatial filters, stability of the link quality is ensured. In this way, degradation on spatial filter quality caused by prediction errors of the AI model is avoided, and better performance of the time domain prediction of the spatial filter is achieved.

Through the technical solution in the above second aspect, the terminal device implements time domain prediction of spatial filter based on the second network model, as well as checks predicted spatial filters based on link quality and determines spatial filters to be used by means of spatial filter sweeping within a certain period of time after the check is failed, so as to achieve real-time monitoring on link quality based on AI model prediction, ensure performance of matched spatial filters between the network device and the terminal device. As such, while reducing overhead of spatial filter measurement and feedback required for spatial filter tracking during movement of the terminal device and reducing switching delay between the spatial filters, stability of the link quality is ensured. In this way, degradation on spatial filter quality caused by prediction errors of the AI model is avoided, and better performance of the time domain prediction of the spatial filter is achieved.

## BRIEF DESCRIPTION OF THE DRAWINGS

FIG. 1 is a schematic diagram of a communication system architecture applied by embodiments of the present disclosure.

FIG. 2 is a schematic diagram of connections of neurons in a neural network.

FIG. 3 is a schematic diagram of a fully connected neural network.

FIG. 4 is a schematic structural diagram of a convolutional neural network.

FIG. 5 is a schematic structural diagram of a long short-term memory (LSTM) unit.

FIG. 6 is a schematic diagram of a downlink beam sweeping process.

FIG. 7 is a schematic diagram of another downlink beam sweeping process.

FIG. 8 is a schematic flowchart of a wireless communication method provided according to embodiments of the present disclosure.

FIG. 9 is a schematic diagram of a link quality check provided according to embodiments of the present disclosure.

FIG. 10 is a schematic diagram of another link quality check provided according to embodiments of the present disclosure.

FIG. 11 is a schematic diagram of an LSTM network model provided according to embodiments of the present disclosure.

FIGS. 12 to 15 are schematic flowcharts of prediction and check provided according to embodiments of the present disclosure, respectively.

FIG. 16 is a schematic flowchart of another wireless communication method provided according to embodiments of the present disclosure.

FIG. 17 is a schematic diagram of yet another link quality check provided according to embodiments of the present disclosure.

FIG. 18 is a schematic diagram of yet another link quality check provided according to embodiments of the present disclosure.

FIGS. 19 to 21 are schematic flowcharts of prediction and check provided according to embodiments of the present disclosure, respectively.

FIG. 22 is a schematic block diagram of a network device provided according to embodiments of the present disclosure.

FIG. 23 is a schematic block diagram of a terminal device provided according to embodiments of the present disclosure.

FIG. 24 is a schematic block diagram of a communication device provided according to embodiments of the present disclosure.

FIG. 25 is a schematic block diagram of an apparatus provided according to embodiments of the present disclosure.

FIG. 26 is a schematic block diagram of a communication system provided according to embodiments of the present disclosure.

## DETAILED DESCRIPTION

Technical solutions of the embodiments of the present disclosure will be described below in conjunction with the accompanying drawings in the embodiments of the present disclosure. It is apparent that the described embodiments are merely some but not all of embodiments of the present disclosure. With respect to the embodiments of the present disclosure, all other embodiments obtained by those skilled in the art without creative effort fall within the protection scope of the present disclosure.

The technical solutions of the embodiments of the present disclosure may be applied to various communication systems, such as, a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial communication network (Non-Terrestrial Networks, NTN) system, a universal mobile telecommunication system (UMTS), wireless local area networks (WLAN), internet of things (IoT), wireless fidelity (WiFi), a fifth-generation communication (5th-Generation, 5G) system, a sixth-generation communication (6th-Generation, 5G) system or other communication systems.

Generally speaking, traditional communication systems support a limited number of connections which are easy to be implemented. However, with development of the communication technology, mobile communication systems will support not only the traditional communication, but also, for example, device to device (D2D) communication, machine to machine (M2M) communication, machine type communication (MTC), vehicle to vehicle (V2V) communication, sidelink (SL) communication, vehicle to everything (V2X) communication or the like. The embodiments of the present disclosure may also be applied to these communication systems.

In some embodiments, a communication system in the embodiments of the present disclosure may be applied to a carrier aggregation (CA) scenario, may also be applied to a dual connectivity (DC) scenario, and may also be applied to a standalone (SA) network deployment scenario, or applied to a non-standalone (NSA) network deployment scenario.

In some embodiments, the communication system in the embodiments of the present disclosure may be applied to an unlicensed spectrum, where the unlicensed spectrum may also be considered as a shared spectrum; or the communication system in the embodiments of the present disclosure may also be applied to a licensed spectrum, where the licensed spectrum may also be considered as an unshared spectrum.

In some embodiments, the communication system in the embodiments of the present disclosure may be applied to a frequency band of FR1 (corresponding to a frequency band range of 410 MHz to 7.125 GHz), may also be applied to a frequency band of FR2 (corresponding to a frequency band range of 24.25 GHz to 52.6 GHz), and may also be applied to new frequency bands, such as, high frequency bands corresponding to a frequency band range of 52.6 GHz to 71 GHz or a frequency band range of 71 GHz to 114.25 GHz.

In the embodiments of the present disclosure, each embodiment will be described in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STATION, STA) device in the WLAN, which may be a cellular phone, a cordless phone, a session initiation protocol (SIP) phone, a wireless local loop (WLL) station, or a personal digital assistant (PDA) device, a handheld device with wireless communication functions, a computing device or other processing devices connected to a wireless modem, an in-vehicle device, a wearable device, a terminal device in a next generation communication system (e.g., an NR network), a terminal device in a future evolved public land mobile network (PLMN) network, or the like.

In the embodiments of the present disclosure, the terminal device may be deployed on land, which includes indoor or outdoor, handheld, wearable, or in-vehicle; the terminal device may also be deployed on water (e.g., on a steamship); and the terminal device may also be deployed in air (e.g., on an airplane, on a balloon, or on a satellite).

In the embodiments of the present disclosure, the terminal device may be a mobile phone, a pad, a computer with a wireless transceiving function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, an in-vehicle communication device, a wireless commu-

4

nication chip/application specific integrated circuit (ASIC)/a system on chip (SoC), or the like.

As an example but not a limitation, in the embodiments of the present disclosure, the terminal device may also be a wearable device. The wearable device may also be referred to as a wearable smart device, which is a generic term for a wearable device by using wearable technology and intelligent design for everyday wear, such as glasses, gloves, a watch, clothing, or shoes. The wearable device is a portable device that is worn directly on a body, or integrated into a user's clothing or accessories. The wearable device is not only a hardware device, but also achieves powerful functions through software supporting as well as data interaction or cloud interaction. Generalized wearable smart devices includes full-featured, large-sized devices that may implement full or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

In the embodiments of the present disclosure, the network device may be a device used for communicating with a mobile device. The network device may be an access point (AP) in the WLAN, a base station (Base Transceiver Station, BTS) in the GSM or CDMA, may also be a base station (NodeB, NB) in the WCDMA, or may also be an evolutional base station (Evolutional Node B, eNB or eNodeB) in the LTE, a relay station or an access point, a network device or base station (gNB) or a transmission reception point (TRP) in an in-vehicle device, a wearable device, a network device in an NR network, a network device in the future evolved PLMN network, a network device in the NTN network, or the like.

As an example but not a limitation, in the embodiments of the present disclosure, the network device may have a mobile characteristic, for example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite. In some embodiments, the network device may also be a base station provided on land, water, and other places.

In the embodiments of the present disclosure, the network device may provide services for a cell, and the terminal device communicates with the network device through transmission resources (such as frequency domain resources, or frequency spectrum resources) used by the cell. The cell may be a cell corresponding to the network device (such as the base station). The cell may belong to a macro base station or a base station corresponding to a small cell. The small cell here may include a metro cell, a micro cell, a pico cell, a femto cell, or the like. These small cells have characteristics of small coverage range and low transmission power, which are applicable for providing a data transmission service with high speed.

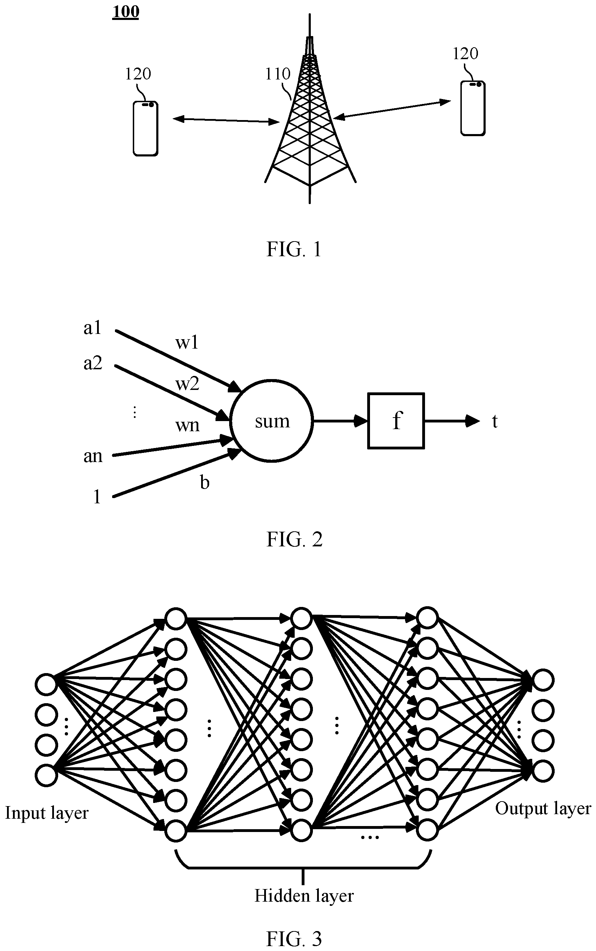

Exemplarily, a communication system 100 applied by the embodiments of the present disclosure is illustrated in FIG. 1. The communication system 100 may include a network device 110, and the network device 110 may be a device used to communicate with a terminal device 120 (or referred to as a communication terminal or terminal). The network device 110 may provide communication coverage for a specific geographic area and communicate with terminal devices located within the coverage area.

FIG. 1 exemplarily illustrates one network device and two terminal devices. In some embodiments, the communication system 100 may include multiple network devices, and coverage range of each network device may be provided therein with other numbers of terminal devices, which is not limited in the embodiments of the present disclosure.

In some embodiments, the communication system 100 may further include other network entities such as a network controller, a mobile management entity, which are not limited in the embodiments of the present disclosure.

It should be understood that a device in a network/system having a communication function in the embodiments of the present disclosure may be referred to as a communication device. Taking the communication system 100 illustrated in FIG. 1 as an example, the communication device may include the network device 110 and the terminal device 120 with the communication function, and the network device 110 and the terminal device 120 may be the specific devices as described above, which will not be repeated here. The communication device may further include other devices in the communication system 100, such as a network controller, a mobility management entity, and other network entities, which are not limited in the embodiments of the present disclosure.

It should be understood that, the terms "system" and "network" are often used interchangeably herein. The term "and/or" herein is only an association relationship to describe associated objects, meaning that there may be three relationships between associated objects, for example, "A and/or B" may represent: A exists alone, both A and B exist, and B exists alone. In addition, a character "/" herein generally means that related objects before and after this character are in an "or" relationship.

It should be understood that, the present disclosure herein relates to a first communication device and a second communication device. The first communication device may be a terminal device, for example, a mobile phone, a machine facility, a customer premise equipment (CPE), an industrial device, a vehicle. The second communication device may be a peer communication device of the first communication device, for example, a network device, a mobile phone, an industrial device, a vehicle. In the embodiments of the present disclosure, the first communication device may be a terminal device, and the second communication device may be a network device (i.e., uplink communication or downlink communication);

or the first communication device may be a first terminal device, and the second communication device may be a second device (i.e., sidelink communication).

Terms used in the section of detailed description are used only for explanation of specific embodiments of the present disclosure and are not intended to limit the present disclosure. The terms "first", "second", "third", "fourth" or the like in the specification and claims of the present disclosure and the drawings are used to distinguish different objects and are not used to describe a specified sequence. Furthermore, the terms "include" and "have" and any variations thereof are intended to cover non-exclusive inclusion.

It should be understood that, "indicate" mentioned in the embodiments of the present disclosure may mean a direct indication or an indirect indication, or represent that there is an association relationship. For example, A indicates B, which may mean that A directly indicates B, for example, B may be obtained through A; or it may mean that A indirectly indicates B, for example, A indicates C, and B may be obtained through C; or it may mean that there is an association relationship between A and B.

In the description of the embodiments of the present disclosure, the term "correspond" may mean that there is a direct correspondence or indirect correspondence between the two, or it may mean that there is an associated relationship between the two, or it may mean a relationship of indicating and being indicated, or configuring and being configured, or the like.

In the embodiments of the present disclosure, "predefined" or "preconfigured" may be achieved by pre-storing corresponding codes, forms or other means used for indicating relevant information in devices (e.g., including a terminal device and network device), and the present disclosure is not limited to the specific implementation thereof. For example, predefined may refer to what is defined in a protocol.

In the embodiments of the present disclosure, the "protocol" may refer to a standard protocol in the field of communication, for example, may be evolution of an existing LTE protocol, NR protocol, Wi-Fi protocol, or protocols related to other communication systems which are related with them, and types of protocol are not limited in the present disclosure.

To facilitate understanding of the technical solutions of the embodiments of the present disclosure, the technical solutions of the present disclosure are described in detail below through specific embodiments. The following related technologies, as optional solutions, may be arbitrarily combined with the technical solutions of the embodiments of the present disclosure, and those combined solutions all belong to the protection scope of the embodiments of the present disclosure. The embodiments of the present disclosure include at least part of following contents.

In order to facilitate a better understanding of the embodiments of the present disclosure, neural network and machine learning related to the present disclosure are described.

The neural network (NN) is an operational model consisting of multiple neuron nodes connected to each other. As illustrated in FIG. 2, connections between the nodes represent weighted values from an input signal to an output signal, called weights; and each node performs weighted summing on different input signals and outputs the sum through a specific activation function.

As illustrated in FIG. 3, a simple neural network includes an input layer, hidden layer(s) and an output layer. Different outputs may be generated through different connection manners, weights and activation functions of multiple neurons, and then a mapping relationship from input to output is fitted. Each upper-level node is connected with all of its next-level nodes. This fully connected model may also be referred to as a deep neural network (DNN) in the present disclosure.

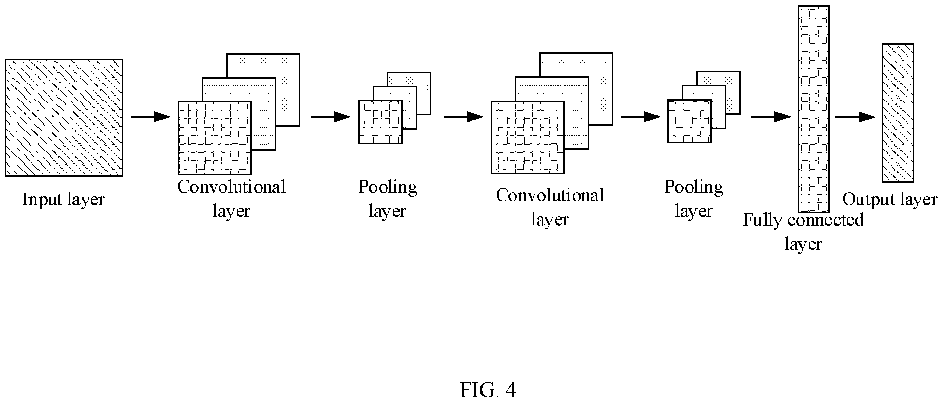

A basic structure of a convolutional neural network (CNN) includes an input layer, multiple convolutional layers, multiple pooling layers, a fully connected layer and an output layer, as illustrated in FIG. 4. Each neuron of convolution kernel(s) in the convolution layers is locally connected with input of the CNN, and through introducing the pooling layers, local maximum or average features of a certain layer are extracted, which effectively reduces parameters of the network and digs local features, to enable the convolutional neural network to converge quickly and obtain excellent performance.

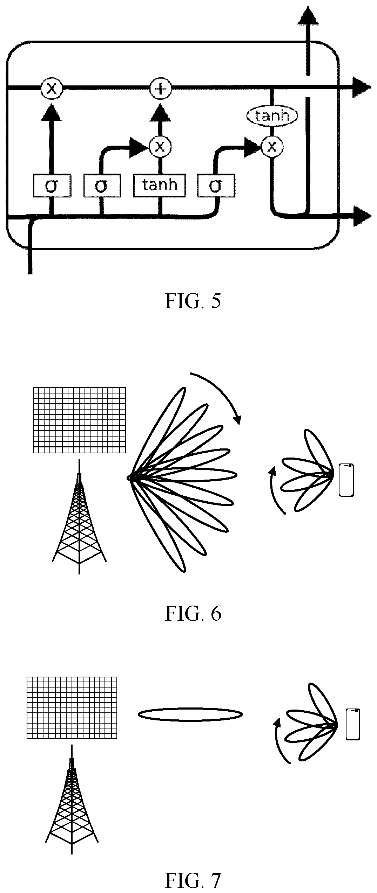

Recurrent neural network (RNN) is a kind of neural network that performs modeling on sequence data, and has achieved remarkable results in a field of natural language processing, such as machine translation and speech recognition. Specifically, the network device memorizes information of past moments, and the information is used for calculation of current output, that is, nodes between hidden layers are no longer unconnected but connected, and input of the hidden layers includes not only the input layer but also output of the hidden layers at a previous moment. RNNs commonly used include structures such as a long short-term memory (LSTM) and a gated recurrent unit (GRU). FIG. 5 illustrates a basic LSTM unit structure, which may include a tanh activation function. Unlike RNN that only considers recent states, a cell state of the LSTM determines which states should be retained and which states should be forgotten, so as to solve defects of traditional RNNs in long-term memory. The present disclosure is only illustrated by using the RNN as an embodiment, and does not exclude replacing RNN with other network structures such as DNN and CNN, which use the same working method for extension.

In order to facilitate a better understanding of the embodiments of the present disclosure, beam management related to the present disclosure is described.

In an NR system, communications in millimeter wave frequency band are introduced, and a corresponding beam management mechanism is also introduced, which includes uplink and downlink beam management. The present disclosure mainly focuses on reduction of overhead and delay related to the downlink beam management, and thus, the downlink beam management is mainly introduced. Specifically, the downlink beam management includes processes such as downlink beam sweeping, optimal beam reporting at a UE side, downlink beam indication at a network side.

A downlink beam sweeping process may mean that: the network device scans different transmit beam directions through downlink reference signals. The UE may perform measurement by using different receive beams, so that all beam pairs may be traversed. The UE calculates the layer 1 reference signal receiving power (L1-RSRP) value corresponding to each beam pair.

The downlink reference signals include a synchronization signal block (SSB) and/or a channel state information reference signal (CSI-RS).

The downlink beam sweeping process may be P1 process (or referred to as a downlink full sweeping process) illustrated in FIG. 6 and P3 process illustrated in FIG. 7.

As illustrated in FIG. 6, the network device may traverse all transmit beams to transmit the downlink reference signals, and the UE side traverses all receive beams to perform measurement and determine corresponding measurement results.

As illustrated in FIG. 7, the network device may transmit the downlink reference signals by using specific transmit beams, and the UE side traverses all receive beams to perform measurement and determine corresponding measurement results.

Beam reporting means that the UE selects K transmit beams with the highest L1-RSRP by comparing L1-RSRP values of all measured beam pairs, and then reports the K transmit beams, as uplink control information, to the network. Here, L1-RSRP may also be replaced by other beam link indicators, such as layer 1 signal to interference plus noise ratio (L1-SINR)/layer 1 reference signal receiving quality (L1-RSRQ). After decoding the beam reporting of the UE, the network device may carry transmission configuration indicator (TCI) states (transmit beams including the SSB or CSI-RS as the reference) via media access control (MAC) or downlink control information (DCI) signaling, to complete beam indication to the UE. The receive beams corresponding to the transmit beams are used by the UE for reception.

The above is basic processes of the beam management used in the NR system. When the UE is moving, the NR system has no support to implement beam tracking and beam prediction for the UE moving scenarios. Therefore, the network and the UE need to trigger the beam management processes periodically or non-periodically to readjust, so as to match the transmit beams and the receive beams.

In order to facilitate a better understanding of the embodiments of the present disclosure, AI-based beam time domain prediction related to the present disclosure is described.

In the artificial intelligence (AI)-based beam time domain prediction, measurement results of past K moments (K is greater than or equal to 1, that is, K>=1) are used as input of the AI model, and prediction results of future F moments are used as output of the AI model; the AI model may be deployed on either the network side or the UE side; measurement results of the AI model may be L1-RSRP, as well as corresponding transmit beam indexes, receive beam indexes or beam pair indexes, and may also include other auxiliary information. By designing matched signaling processes to support AI functions, the AI-based beam time domain prediction may be achieved, so that there is no need to adopt the beam management processes in the NR system within the future F moments, and beam tracking in the UE moving scenarios may be achieved directly.

In order to facilitate a better understanding of the embodiments of the present disclosure, problems solved by the present disclosure are described.

When the UE is moving, it is necessary to perform beam switching. However, at present, the NR system has no support to implement beam tracking and beam prediction for the UE moving scenarios. Therefore, the network and the UE need to trigger the beam management processes periodically or non-periodically to readjust, so as to match the transmit beams and the receive beams.

For the downlink full sweeping process (that is, P1 process), the UE needs to traverse all combinations of transmit and receive beams, which results in huge overhead and delay. For example, the network device deploys 64 different downlink transmit beams (carried via up to 64 SSBs) in the FR2 frequency band. The UE, upon reception, uses multiple antenna panels (including only one receive beam panel) to perform receive beam sweeping simultaneously, and each antenna panel has 4 receive beams; then the UE needs to measure at least 256 beam pairs, and thus downlink resource overhead of 256 resources is needed.

From a time perspective, each SSB period is approximately 20ms, so 4 SSB periods are required to complete the measurement of 4 receiving beams (assuming that the multiple receive antenna panels may perform beam sweeping using SSBs), and thus at least 80ms is required.

Therefore, when the UE is in a fast-moving scenario, it is necessary to perform beam switching frequently, which triggers beam management processes frequently under beam management technology solutions of the existing NR system, resulting in huge overhead and delay. Therefore, it is necessary to design beam switching and beam tracking solutions for UE moving scenarios.

In addition, a framework of the AI-based beam time-domain prediction may effectively reduce the huge overhead and delay caused by frequent beam management, to achieve low-cost beam tracking. However, the limited generalization of the AI model itself and complex changes of the channel environment during the UE movement process may lead to mismatch between the training set and actual deployment environment, which may lead to the problem of AI model prediction errors during the AI-based beam time domain prediction. That is, within future F moments, optimal transmit beam(s), optimal receive beam(s) or optimal beam pair(s) predicted and output by the AI model are not optimal choices, and even corresponding link quality may be too poor to enable normal communication between the network and the UE.

Therefore, how to improve robustness of the AI-based beam time domain prediction and ensure the stability of the link quality is also a problem to be solved.

In order to solve the above technical problems, the present disclosure proposes a solution of AI model-based beam time domain prediction, while achieving the beam time domain prediction by deploying the AI model at the network or UE side, a link quality check and beam management fallback mechanism based on a link quality threshold is designed, so that the network and the UE may achieve real-time monitoring on link quality of the AI-based beam time domain prediction, and performance of matched beam pairs between the network and the UE is ensured. According to the present disclosure, the AI model is deployed at either the network or UE side online, and the matched link quality check and beam management fallback mechanism is designed, while reducing overhead of beam measurement and feedback required for beam tracking during movement of the UE and reducing switching delay between beams, the stability of the link quality is ensured. In this way, degradation on beam quality caused by prediction errors of the AI model is avoided, and better performance of time domain prediction of the beam is achieved.

The technical solutions of the present disclosure are described in detail below through specific embodiments.

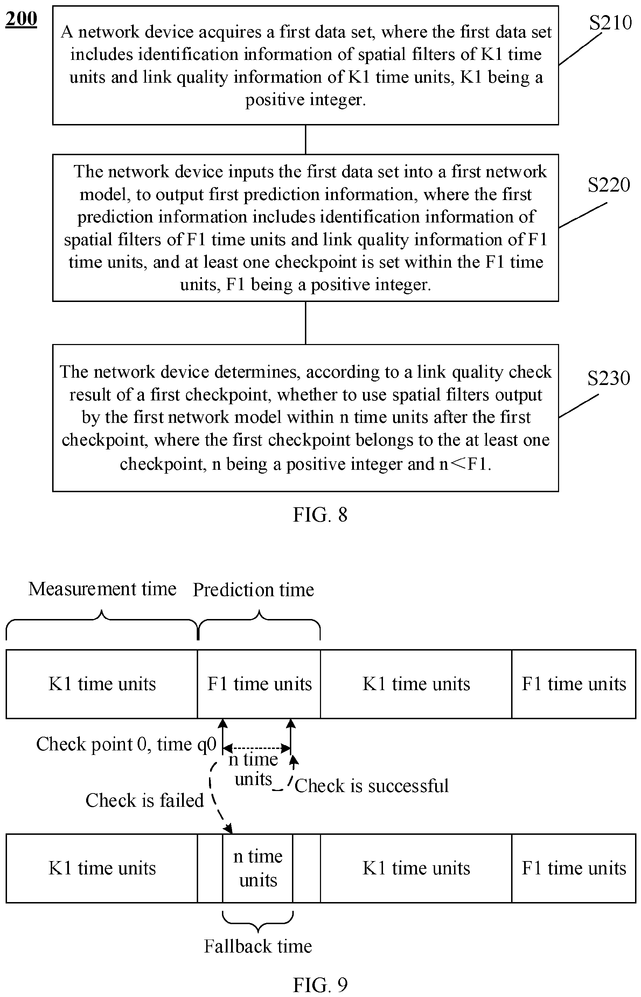

FIG. 8 is a schematic flowchart of a wireless communication method 200 in accordance with the embodiments of the present disclosure. The wireless communication method 200 may be performed by a network device in the communication system illustrated in FIG. 1. As illustrated in FIG. 8, the wireless communication method 200 f may include at least part of the following contents.

In S210, a network device acquires a first data set, where the first data set includes identification information of spatial filters of K1 time units and link quality information of K1 time units, K1 being a positive integer.

In S220, the network device inputs the first data set into a first network model, to output first prediction information, where the first prediction information includes identification information of spatial filters of F1 time units and link quality information of F1 time units, and at least one checkpoint is set within the F1 time units, F1 being a positive integer.

In S230, the network device determines, according to a link quality check result of a first checkpoint, whether to use spatial filters output by the first network model within n time units after the first checkpoint, where the first checkpoint belongs to the at least one checkpoint, n being a positive integer and n being less than F1 (that is, n<F1).

In the embodiments of the present disclosure, the spatial filter may also be referred to as a beam, or a spatial relation, or a spatial setting, or a spatial domain filter, or a reference signal.

In the embodiments of the present disclosure, the first checkpoint may be any one of the at least one checkpoint, and the network device or a terminal device performs link quality check at the at least one checkpoint in turn.

In the embodiments of the present disclosure, one time unit corresponds to identification information of one spatial filter and one piece of link quality information, where the one piece of link quality information may be link quality information measured under the one spatial filter. That is, in the first data set, the K1 time units correspond to identification information of the K1 spatial filters and K1 pieces of link quality information, respectively; and in the first prediction information, the F1 time units correspond to identification information of the F1 spatial filters and F1 pieces of link quality information, respectively.

In the embodiments of the present disclosure, when beam time domain prediction is performed based on the AI model (i.e., the first network model), it is determined whether link quality of optimal transmit beams or optimal beam pairs predicted by the AI model within the F1 time units meets a standard through setting a link quality threshold either on the network side or the terminal side. When prediction results of the AI model do not meet the standard, a reasonable beam management fallback mechanism is designed, to enable the network device and the terminal device may match correct beam pairs. According to the present disclosure, while reducing the overhead of beam management during performing beam time domain prediction based on the AI model, the stability of the link quality is ensured.

In some embodiments, the time unit may include, but is not limited to, one of: a slot, a frame, a subframe, a symbol, a millisecond, or a microsecond.

In some embodiments, the spatial filters include one optimal transmitting spatial filter (such as an optimal transmit beam), or the spatial filters include one optimal transmitting spatial filter and one optimal receiving spatial filter (such as a beam pair consisting of an optimal transmit beam and an optimal receive beam).

In some embodiments, the transmitting spatial filter may also be referred to as a transmit beam (Tx beam) or a transmitting-end spatial domain filter, and the above terms may be replaced with each other.

In some embodiments, the receiving spatial filter may also be referred to as a receive beam (Rx beam) or a receiving-end spatial domain filter, and the above terms may be replaced with each other.

In some embodiments, a combination of the transmitting spatial filter and the receiving spatial filter may also be referred to as a beam pair, a spatial filter pair, or a spatial filter group, and the above terms may be replaced with each other.

In some embodiments, the identification information of the spatial filter may be an index or an identifier of the spatial filter.

For example, the identification information of the transmitting spatial filter may be an index or an identifier of the transmitting spatial filter.

For another example, the identification information of the receiving spatial filter may be an index or an identifier of the receiving spatial filter.

For yet another example, the identification information of the combination of the transmitting spatial filter and the receiving spatial filter may be an index of the combination.

In some embodiments, the link quality information may include, but is not limited to, at least one of:
layer 1 reference signal receiving power (L1-RSRP), layer 1 reference signal receiving quality (L1-RSRQ), or a layer 1 signal to interference plus noise ratio (L1-SINR).

In some embodiments, in a case where the spatial filters include an optimal transmitting spatial filter, the first data set is acquired by the network device by means of spatial filter sweeping. For example, the network device acquires the identification information of the optimal transmitting spatial filters of the K1 time units by means of spatial filter sweeping, and takes the link measurement information and the identification information of the optimal transmitting spatial filters of the past K1 time units as the first data set.

In some embodiments, in a case where the spatial filters include an optimal transmitting spatial filter and an optimal receiving spatial filter, the first data set is acquired by the network device based on identification information of optimal receiving spatial filters reported by the terminal device, and optimal transmitting spatial filters determined by means of spatial filter sweeping. Specifically, for example, the terminal device reports the identification information of the optimal receiving spatial filters of the past K1 time units, the network device acquires the identification information of the optimal transmitting spatial filters of the K1 time units by means of spatial filter sweeping, and takes the link measurement information, the identification information of the optimal transmitting spatial filters and the identification information of the optimal receiving spatial filters of the past K1 time units as the first data set.

In some embodiments, different checkpoints are separated by the n time units in a case where a number of the at least one checkpoint is greater than or equal to 2. Certainly, intervals between different checkpoints may also be different. For example, the interval between checkpoint 1 and checkpoint 2 is n1 time units, and the interval between checkpoint 2 and checkpoint 3 is n2 time units. It may be determined whether to use the spatial filters output by the first network model within the subsequent n1 time units based on the check result of checkpoint 1, it may be determined whether to use the spatial filters output by the first network model within the subsequent n2 time units based on the check result of checkpoint 2, and so on.

In some embodiments, the S230 may specifically include the following operations.

The network device uses the spatial filters output by the first network model within the n time units after the first checkpoint in a case where a link quality check for the first checkpoint is successful; and/or the network device determines spatial filters to be used by means of spatial filter sweeping within the n time units after the first checkpoint in a case where a link quality check for the first checkpoint is failed.

In some embodiments, the K1 time units and the F1 time units may be consecutive time units. Specifically, for example, the F1 time units are consecutive F1 time units after the K1 time units.

In some embodiments, the K1 time units may be measurement time, and the F1 time units may be prediction time.

In some embodiments, K1 is greater or equal than F1 (that is, $K1 \geq F1$). Optionally, the specific values of K1 and F1 may be configured by the network device, or the specific values of K1 and F1 may be agreed upon by a protocol. Optionally, the specific values of K1 and F1 may be determined by model parameters of the first network model.

In some embodiments, the link quality check result of the first checkpoint is determined based on link quality information of the first checkpoint and a link quality threshold.

Where the link quality information of the first checkpoint is: link quality information measured by a terminal device using an optimal receiving spatial filter corresponding to the first checkpoint when the network device transmits a reference signal using an optimal transmitting spatial filter corresponding to the first checkpoint.

In some embodiments, the reference signal may be a CSI-RS or an SSB.

In some embodiments, the optimal transmitting spatial filter corresponding to the first checkpoint may be an optimal transmitting spatial filter of the time unit to which the first checkpoint belongs predicted by the first network model.

Specifically, the link quality check for the first checkpoint is successful in a case where the link quality information of the first checkpoint is greater than or equal to the link quality threshold; and/or the link quality check for the first checkpoint is failed in a case where the link quality information of the first checkpoint is less than the link quality threshold.

Specifically, for example, at the checkpoint q0, the network side or terminal side compares the link quality r0 after the terminal device accesses the spatial filter (such as the transmit beam, receive beam or beam pair) of the time unit to which the checkpoint q0 belongs based on the link quality threshold (r_th). When r0 is greater or equal than r_th (that is, r0≥r_th), the check is successful. When r0 is less than r_th (that is, r0<r_th), the check is failed, which indicates that the spatial filter of the time unit to which the checkpoint q0 belongs predicted by the first network model may occur wrong.

The check is successful: when the check for the checkpoint q0 is successful, the spatial filter prediction results of the first network model may be continued to use within the subsequent n time units (including the time unit in which the checkpoint q0 is located), to achieve rapid access between the terminal device and the network device until the next checkpoint is encountered.

The check is failed: when the check for the checkpoint q0 is failed, the spatial filter prediction results of the subsequent n time units (including the time unit in which the checkpoint q0 is located) are considered unreliable, and the network device and terminal device cannot directly access the corresponding spatial filter (the beam or beam pair) through the prediction results of the first network model. Therefore, a period from the checkpoint q0 to the next checkpoint, that is, the n time units after the checkpoint q0, will be set as a fallback period. Within the fallback period, matching of the beam pairs and access of the terminal devices may be achieved by adopting traditional beam management manners through beam measurement and reporting. Until the next checkpoint of the checkpoint q0, if the check is successful, the beam prediction results of the first network model are restored to adopt. If the check is still failed, the above process is repeated until the next one of the next checkpoint, or the F1 time units (i.e. the prediction time) are over.

Under the link quality check-based beam management fallback mechanism proposed in the present disclosure, the check configuration group {q0, n} may significantly affect the performance of the solution. When n is configured too large, the check density is too low, which may cause the spatial filter predicted by the first network model to be undetected when it is wrong. However, when n is configured too small, the check density is too high, which may cause additional check signaling overhead. Therefore, the check configuration group may be dynamically configured by the network device or the terminal device according to the actual situations.

In some embodiments, the optimal receiving spatial filter corresponding to the first checkpoint is determined by the terminal device based on the optimal transmitting spatial filter corresponding to the first checkpoint. Specifically, for example, the network device may trigger a periodic terminal device receiving spatial filter sweeping process (i.e., the P3 process illustrate in FIG. 7): transmitting a CSI-RS resource set whose repetitions are set to open or ON, that is, all CSI-RS resources in the CSI-RS resource set are transmitted by using the optimal transmitting spatial filter corresponding to the first checkpoint predicted by the first network model, and the terminal device measures the CSI-RSs through different receiving spatial filters and selects the optimal receiving spatial filter.

In some embodiments, the optimal receiving spatial filter corresponding to the first checkpoint is instructed to the terminal device by the network device. Specifically, for example, in the case where the spatial filters include an optimal transmitting spatial filter and an optimal receiving spatial filter, the network device may instruct to the terminal device the optimal receiving spatial filter of the time unit to which the first checkpoint belongs predicted by the first network model.

In some embodiments, the link quality check result of the first checkpoint is determined by the network device based on the link quality information of the first checkpoint and the link quality threshold reported by the terminal device. That is, the check may be performed by the network device.

In some embodiments, the link quality check result of the first checkpoint is determined by the terminal device based on the link quality information of the first checkpoint and the link quality threshold, and reported to the network device. That is, the check may be performed by the terminal device.

In some embodiments, the link quality threshold is determined based on an average value or a weighted average value of the link quality information of the K1 time units.

In some embodiments, the link quality threshold is determined based on the following formula 1:

$$r\_th = (Q_1 + Q_2 + ... + Q_{K1})/K1 - X \qquad \text{(formula 1)}$$

Where r_th represents the link quality threshold; $Q_1$ to $Q_{K1}$ represent the link quality information of the K1 time units, respectively; and X represents a link quality threshold offset value. That is, $Q_1$ represents link quality information of a first time unit within the K1 time units, $Q_2$ represents link quality information of a second time unit within the K1 time units, ..., and $Q_{K1}$ represents link quality information of a K1-th time unit within the K1 time units.

In some embodiments, the link quality threshold is determined based on the following formula 2:

$$r\_th = (a_1 * Q_1 + a_2 * Q_2 + ... + a_{K1} * Q_{K1})/K1 - X \qquad \text{(formula 2)}$$

Where r_th represents the link quality threshold; $Q_1$ to $Q_{K1}$ represent the link quality information of the K1 time units, respectively; $a_1$ to $a_{K1}$ represent weighted weights of the K1 time units, respectively, and $a_1 + a_2 + ... + a_{K1} = 1$; and X represents a link quality threshold offset value. That is, $Q_1$ represents link quality information of a first time unit within the K1 time units, $Q_2$ represents link quality information of a second time unit within the K1 time units, ..., and $Q_{K1}$ represents link quality information of a K1-th time unit within the K1 time units. a1 represents a weighted weight of the first time unit within the K1 time units, $a_2$ represents a weighted weight of the second time unit within the K1 time units, ..., and $a_{K1}$ represents a weighted weight of the K1-th time unit within the K1 time units.

In some embodiments, in the formula 2, $a_1 <= a_2 <= ... <= a_{K1}$. This is because the closer the moment is to the checkpoint, the closer the channel environment and link quality of the moment are to these of the checkpoint, and the weighted weight should be greater.

In some embodiments, in the formula 1 and formula 2, a value of X is determined based on the channel quality. Specifically, X is greater than 0 (that is, X>0), the reason for setting X is that, in the actual systems, change of the link quality of the beam may decline to a certain extent as the terminal device moves, and thus, a deviation of the beam quality within a certain range is allowed. If X is not set or is set too low, it may cause that the check is failed every time. Even when the beam or the beam pair predicted by the first network model is correct, a requirement for the link quality threshold cannot be met. Therefore, the value of X may be configured according to the different channel qualities. For example, the channel quality may be evaluated based on the CSI-RSs or the SSBs.

In some embodiments, in the formula 1 and formula 2, the value of X is configured by the network device, or the value of X is configured by the terminal device.

In some embodiments, the link quality threshold is agreed upon by a protocol, or the link quality threshold is configured by the network device.

In some embodiments, the unit of the link quality threshold (r_th) is decibel (dB) or milliwatt decibel (dBm), which is not limited in the present disclosure.

In some embodiments, in a case where the link quality check for the first checkpoint is failed, the network device transmits first indication information, where the first indication information is used for indicating that a terminal device determines spatial filters to be used by means of spatial filter sweeping within the n time units after the first checkpoint.

In some embodiments, the K1 time units may be the measurement time, the F1 time units may be the prediction time, and the K1 time units and the F1 time units may be a complete prediction period.

Specifically, as illustrated in FIG. 9, the network device determines whether to use the spatial filters output by the first network model within the n time units after the checkpoint 0 according to the link quality check result of the checkpoint 0, where a starting position of the checkpoint 0 is located at the time unit q0 within the F1 time units. Specifically, for example, when the check for the checkpoint 0 is successful, whether the network device uses the spatial filters output by the first network model within the n time units after the checkpoint 0; and when the check for the checkpoint 0 is failed, the network device determines the spatial filters to be used by means of spatial filter sweeping within the n time units after the checkpoint 0. That is, when the check for the checkpoint 0 is failed, the matching of the beam pairs and the access of the terminal devices may be achieved by adopting the traditional beam management manners through beam measurement and reporting within the n time units after the checkpoint 0, and the n time units after the checkpoint 0 may also be called as the fallback time or fallback period.

In some embodiments, as illustrated in FIG. 9, one or more checkpoints are set within the F1 time units. A configuration manner of the checkpoint(s) is that a starting position of the 0-th checkpoint is set as the time unit q0, and a check interval between adjacent checkpoints is that n is greater than or equal to 1 (that is, n>=1). Therefore, the check configuration group {q0, n} may determine a check starting time and check density within the F1 time units, and the check configuration group {q0, n} may be configured by the network device or the terminal device.

In some embodiments, a starting position of the at least one checkpoint and a value of n are configured by the network device, or a starting position of the at least one checkpoint and a value of n are agreed upon by a protocol. For example, the network device may instruct checkpoint configuration (including the starting position of the checkpoint and the value of n) to the terminal device through a media access control control element (MAC CE) or DCI.

In some embodiments, a starting position of the at least one checkpoint and a value of n are determined by the network device or the terminal device based on a check configuration group; where the check configuration group includes a plurality of check configuration types, and each of the plurality of check configuration types corresponds to a starting position of one checkpoint and one way of assigning value to n.

In some embodiments, the check configuration group is agreed upon by a protocol, or the check configuration group is pre-configured by the network device.

Specifically, for example, the checkpoint configuration group may be as shown in Table 1. The check configuration group {q0,n} may have N pre-configured groups of configuration to form one check configuration group, and is indicated by adding an indication field of log2 N bits in the MAC CE or DCI, for example, N=4 in Table 1.

Table 1

| Configuration Type | Checkpoint q0 | n |
|---|---|---|
| 0 | Time Unit 1 | 1 |
| 1 | Time Unit 1 | 3 |

(continued)

| Configuration Type | Checkpoint q0 | n |
|---|---|---|
| 2 | Time unit F1/2 | 1 |
| 3 | Time unit F1/2 | 3 |

Specifically, for another example, the checkpoint configuration group may be as shown in Table 2.

Table 2

| Configuration Type | Checkpoint q0 | Checkpoint q1 | n |
|---|---|---|---|
| 0 | Time Unit 1 | Time Unit 3 | 1 |
| 1 | Time Unit 1 | Time Unit 5 | 3 |
| 2 | Time Unit 2 | Time Unit 4 | 1 |
| 3 | Time Unit 2 | Time Unit 6 | 3 |

In the embodiments of the present disclosure, the measurement time of the first K1 time units are statically and periodically spaced from the prediction time of the last F1 time units, as illustrated in FIG. 9. When the moving speed of the terminal device is uneven, or the moving direction of the terminal device changes, it may cause that the prediction of the first network model in time units relatively ahead within prediction time of the last F1 time units has higher accuracy, which enables the network device and the terminal device to be matched to spatial filters that are correct and has better link quality. However, the prediction performance in time units relatively backward may be poor since spatial and temporal correlation between the spatial filters that should be used by the network device and the terminal device within these time units, and the selected spatial filters within measurement time of the previous K1 time units as well as the corresponding link quality measurement results are relatively weak, and the prediction of the first network model in the process of extracting the correlation to generate prediction may be more inaccurate due to the change in the movement patterns of the terminal devices. Specifically, it may cause that the check is always failed at the checkpoints relatively backward within the measurement time of the F1 time units, and the fallback is required for beam sweeping, which may not effectively utilize the first network model to reduce the overhead of beam sweeping and access delay. In this case, the embodiments of the present disclosure further proposes a link quality check-based dynamic beam management fallback mechanism, that is, the measurement time of the K1 time units and the prediction time of the F1 time units are dynamically shifted and updated.

In some embodiments, after the check for the first checkpoint is terminated, the network device updates the first data set according to the link quality check result of the first checkpoint; the network device inputs a updated first data set into the first network model, to output updated first prediction information, and determines a updated first checkpoint within updated F1 time units included in the updated first prediction information; and the network device determines, according to a link quality check result of the updated first checkpoint, whether to use the spatial filters output by the first network model within n time units after the updated first checkpoint within the updated F1 time units.

In some embodiments, in the case where the link quality check for the first checkpoint is successful, updated K1 time units included in the updated first data set include m time units within the F1 time units, and the updated K1 time units do not include first m time units within the K1 time units, and the updated first checkpoint is located at an m-th time unit within the updated F1 time units; where the m time units within the F1 time units are a time unit to which the first checkpoint belongs and time units before the time unit to which the first check point belongs, within the F1 time units, m being a positive integer.

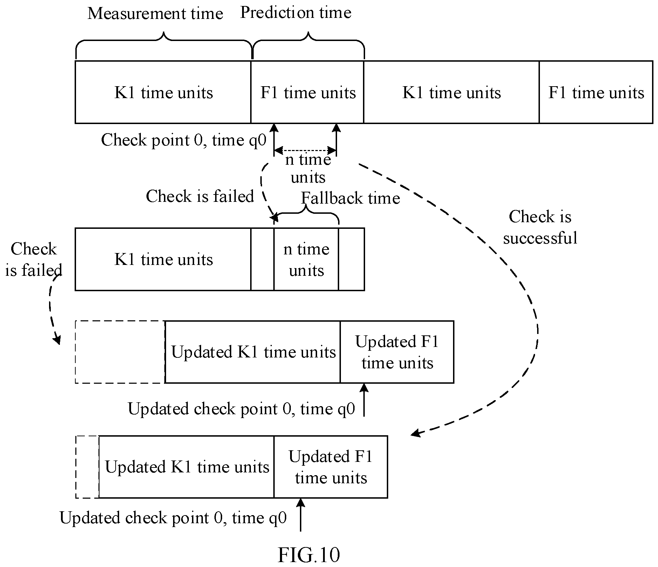

Specifically, for example, it is assumed that the first checkpoint is the checkpoint 0, when the check is successful at the checkpoint 0 (located in the q0-th time unit within the F1 time units): considering that all spatial filter prediction results before the checkpoint 0 are correct, which enables the network device and the terminal device to be paired normally. At this time, the measurement time and the prediction time are shifted and updated. As illustrated in FIG. 10, link quality information and predicted spatial filters of first q0 time units within the prediction time are also taken as input of the first network model, and link quality information and identification information of spatial filters of earliest q0 time units within the past K1 time units included in the first data set are discarded, and identification information and link quality information of spatial filters of the updated K1 time units are re-input into the first network model, to obtain updated prediction results of the first network model of future F1 time units. At the same time, the checkpoint 0 and the corresponding q0-th time unit are updated.

In some embodiments, in the case where the link quality check for the first checkpoint is failed, updated K1 time units included in the updated first data set include m+n time units within the F1 time units, and the updated K1 time units do not include first m+n time units within the K1 time units, and the updated first checkpoint is located at an m+n-th time unit within the updated F1 time unit; where the m time units within the F1 time units are a time unit to which the first checkpoint belongs and time units before the time unit to which the first check point belongs, within the F1 time units, m being a positive integer.

Specifically, for example, it is assumed that the first checkpoint is the checkpoint 0, when the check is failed at the checkpoint 0 (located in the q0-th time unit within the F1 time units): n time units after the checkpoint 0 (including the q0-th time unit) enter the fallback time, and the beam pair between the network device and the terminal device are matched by adopting the traditional beam management manners. At this time, the measurement time and the prediction time are also shifted and updated. As illustrated in FIG. 10, link quality information and predicted spatial filters of first q0+n time units within the prediction time are taken as input of the first network model, and link quality information and identification information of spatial filters of earliest q0+n time units within the past K1 time units included in the first data set are discarded, and identification information and link quality information of spatial filters of the updated K1 time units are re-input into the first network model, to obtain updated prediction results of the first network model of future F1 time units. At the same time, the checkpoint 0 and the corresponding q0-th time unit are updated.

In the present embodiments, the link quality check-based dynamic beam management fallback mechanism may take the correct and available prediction results of the first network model as the input of the first network model in real time, and update the output results of the first network model in real time, so that the first network model may more accurately predict the spatial filters in the short period of time in the future.

In some embodiments, a starting position of the first checkpoint and a value of n are dynamically configured by the network device based on mobility of the terminal device, or a starting position of the first checkpoint and a value of n are dynamically configured by the network device based on check results within a plurality of past time units.

Specifically, for example, in the link quality check-based dynamic beam management fallback mechanism, the starting position of the first checkpoint and the value of n are dynamically configured by the network device based on the mobility of the terminal device, or the starting position of the first checkpoint and the value of n are dynamically configured by the network device based on the check results within the plurality of past time units.

In some embodiments, it is assumed that the starting position of the first checkpoint is q0, the check configuration group of {q0, n} also significantly affects the performance of the solutions of the present embodiment, especially the configuration of q0. When the configuration of q0 is small (i.e., the first checkpoint within the F1 time units is too forward, e.g., the check is performed on the first time unit), the optimal prediction performance of the first network model may be ensured, however, the first network model is necessary to perform online inference frequently to update the prediction result. When the configuration of q0 is large, the number of online inferences performed by the first network model is small and one-time prediction result may be used for a long time, however, the stable accuracy of the spatial filters predicted by the first network model cannot be ensured. Considering that the check configuration group {q0,n} is dynamically configured by the MAC CE or DCI, the network device may dynamically adjust the configuration of q0 according to the specific situation of the movement of the terminal device and the check results of the plurality of past time units. When the check results of the plurality of past time units are successful, a larger q0 may be configured to reduce the number of inferences of the first network model. When the check is failed, a smaller q0 may be configured to increase the number of inferences of the first network model, to ensure the prediction performance of the first network model.

In some embodiments, the first network model may be an RNN, for example, RNN-like structures such as LSTM or GRU. Certainly, the first network model may also be other model structures such as DNN or CNN, which is not limited in the present disclosure.

In some embodiments, the first network model may be obtained by using an offline training way, or by using an online training way, or by using a combination way of offline training and online training. For example, the network device first obtains a static training result through the offline training way, further uses the offline trained model to perform optimal beam or beam pair prediction, the network device may continue to collect more measurement data in subsequent measurements and/or reports of the terminal device, and then use the measurement results to continue to perform training on the first network model to optimize the model parameters, so as to achieve better prediction results.

In some embodiments, the first network model is obtained by the network device through training.

In some embodiments, the network device acquires a second data set; where the second data set includes at least one of: identification information of spatial filters of K2 time units, link quality information of K2 time units, identification information of spatial filters of F2 time units, or link quality information of F2 time units, K2 and F2 being positive integers; and the network device performs training on the first network model according to the second data set, to obtain model parameters of the first network model.

In some embodiments, K2 is greater than or equal to K1 (that is, K2 ≥ K1), and/or F2 is greater than or equal to F1 (that is, F2 ≥ F1).

In some embodiments, during the model training phase, the input of the first network model may be indexes of beams or beam pairs of the K2 time units and corresponding link quality information, the label may be indexes of beams or beam pairs with optimal link quality (or optimal measurement result) of the F2 time units, and the output may be the indexes of beams or beam pairs with the optimal link quality of the F2 time units.

In some embodiments, the first network model is obtained by other devices through training. Specifically, for example, the network device receives the trained model parameter information of the first network model. The other devices may be a terminal device, a third-party device, or a core network device, which is not limited in the present disclosure.

In some embodiments, the offline training way of the first network model is deployed at the network side or the terminal side, and a constructed data set (i.e., the second data set) may include the following parts.

Input: optimal transmit beam indexes or beam pair indexes of the consecutive K2 time units and corresponding link quality information L1-RSRP.

Label: optimal transmit beam indexes or beam pair indexes of the consecutive F2 time units after the consecutive K2 time units of the input, and corresponding link quality information L1-RSRP.

In the offline training process, the above data set is obtained by the network device and the terminal device through performing periodic beam selection of multiple consecutive K2+F2 time units according to the beam management protocol during the movement of the terminal device, and through reporting the data set by the terminal device to the network device.

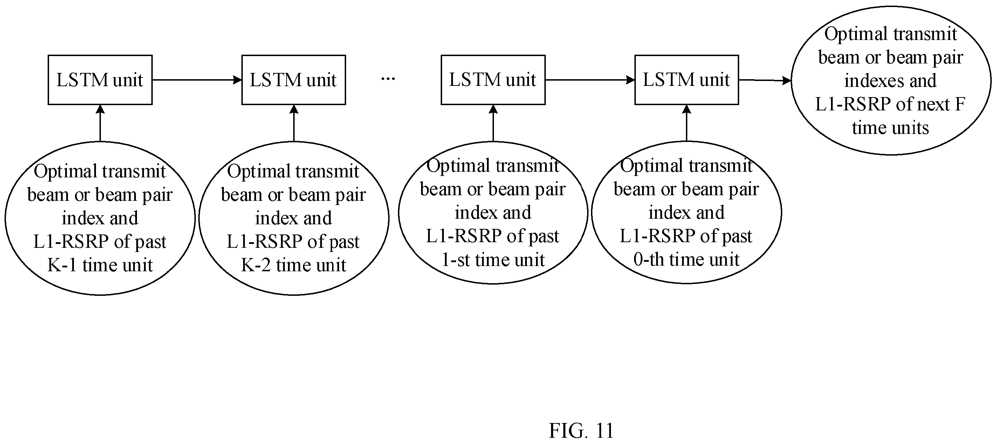

For the first network model, since the correlation of beam time domain sequence between the measurement time of the past K time units and the prediction time of the next F time units are extracted in the present disclosure, LSTM is used for prediction. The specific structure is illustrated in FIG. 11.

In the offline training process, the first network model may be implemented through directly selecting the optimal transmit beam(s) or beam pair index(s) from the multiple candidate transmit beams or beam pairs, or through predicting the L1-RSRP of all candidate transmit beams or beam pairs and selecting the best optimal one(or more) as the output result. The embodiments of the present disclosure can support both implementations. Since the implementation logic of the second method is very direct, but the network complexity is relatively high and the predicted L1-RSRP of other transmit beams or beam pairs cannot be used. As such, the first implementation method is used as an example for description below.

For the training process of the optimal transmit beam index or beam pair index, a cross entropy loss function may be adopted.

A transmit beam index is used as a label: taking 64 candidate transmit beams as an example, the label of the optimal transmit beam is one-hot encoded. For example, the optimal transmit beam is mt, the label may be encoded as [0, .., 0,1,0,..0], and the vector is a vector with a length of 64, where only the mt-th position is 1 and all other positions are 0. The model may be trained by using a multi-class cross entropy loss function.

A beam pair index is used as a label: taking 64 candidate transmit beams, 4 candidate receive beams and a total of 256 candidate beam pairs as an example, the label of the optimal beam pair is one-hot encoded. For example, for the optimal beam pair {mt,nt}, the label may be encoded as [0,..,0,1,0,..0], and the vector is a vector with a length of 256, where only the mt*64+nt-th position is 1 and all other positions are 0. The model may be trained by using the multi-class cross entropy loss function.

Considering that computing power of the network device is usually much better than that of the terminal device, thus, the offline training phase is preferably implemented at the network side. Specifically, for example, it is assumed that the offline training phase is implemented at the network side, after the offline training is completed, the network device may transmit the offline trained network model from the network device to the terminal side through model download, to realize online inference and prediction.

The technical solutions of the present disclosure are described in detail below through specific embodiments.

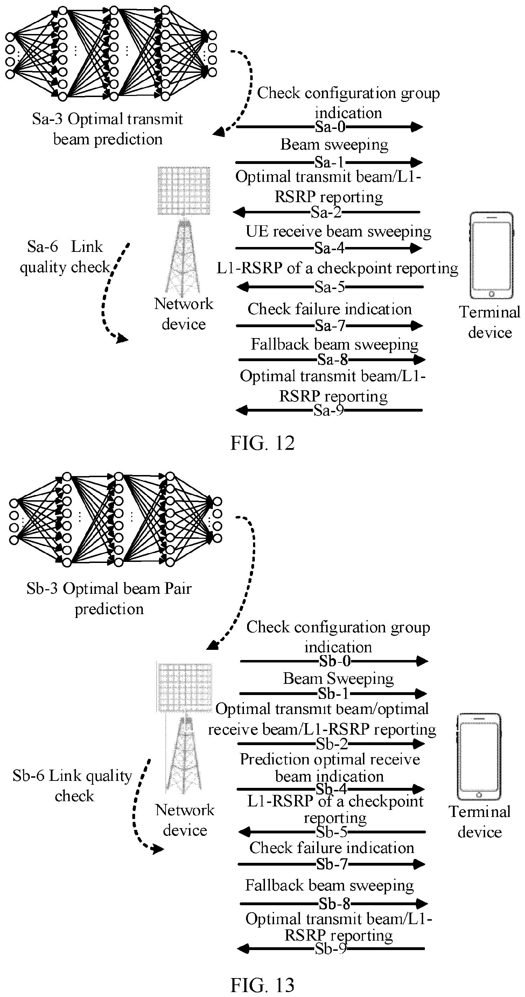

Embodiment I, inference and prediction is performed based on the first network model at the network side, and check is performed at the network side. As illustrated in FIG. 12, the network side deploys the first network model, takes the link measurement information (L1-RSRP) and the optimal transmit beam(s) of the past K1 time units as the input, takes the optimal transmit beam(s) of the next F1 time units as the output, and implements the check for the checkpoint at the network side. Specifically, check and prediction may be implemented through the following Sa-0 to Sa-9.

In Sa-0, the network device instructs the checkpoint configuration to the terminal device through the MAC CE or DCI. Specifically, the check configuration group {q0,n} may have N pre-configured groups of configuration to form one check configuration group table, and is indicated by adding the indication field of log2 N bits in the MAC CE or DCI, for example, N=4 in above Table 1.

In Sa-1 and Sa-2, the Sa-1 and Sa-2 are performed within the measurement time of the K1 time units. The network device may directly acquire the transmit beam and the corresponding L1-RSRP within each time unit through beam sweeping process, and take as the input of the first network model.

In Sa-3, the network device directly acquires, through the output of the first network model, the transmit beam(s) that should be adopted by the network side within the next F1 time units, however, the terminal device cannot acquire the receive beam information that should be adopted within the next F1 time units.

In Sa-4, thus, the Sa-4 is performed within the next F1 time units to determine the optimal receive beam(s) at the terminal side. Specifically, the network device may trigger a periodic terminal device receive beam sweeping process (P3 process): transmitting a CSI-RS resource set whose repetitions are set to ON, that is, all CSI-RS resources in the CSI-RS resource set are transmitted by using the transmit beam of the f-th moment predicted by the first network model. The terminal device measures the CSI-RSs through different receive beams and selects the optimal receive beam.

In Sa-5, the terminal device reports the L1-RSRP at the moment of the checkpoint, according to the Sa-0 configuration.

In Sa-6, the network side performs link quality check. The calculation way of link quality threshold and the value of X in the check process are determined by the network side. If the check is failed, Sa-7 to Sa-9 processes are triggered.

In Sa-7, the network device indicates that the link quality information check is failed through the DCI, and the fallback is required for beam sweeping.

In Sa-8, beam sweeping is performed within the fallback time, to reselect the optimal transmit beam(s) and the optimal receive beam(s).

In Sa-9, the terminal device reports the optimal transmit beam(s) and the corresponding L1-RSRP within the fallback time.

Specifically, the Sa-8 and Sa-9 processes are repeated until the next checkpoint.

Embodiment II, inference and prediction is performed based on the first network model at the network side, and check is performed at the network side. As illustrated in FIG. 13, the network side deploys the first network model, takes the link measurement information (L1-RSRP) and the optimal beam pair(s) of the past K1 time units as the input, takes the optimal beam pair(s) of the next F1 time units as the output, and implements check for the checkpoints at the network side. Specifically, check and prediction may be implemented through the following Sb-0 to Sb-9.

In Sb-0, the network device instructs the checkpoint configuration to the terminal device through the MAC CE or DCI. Specifically, the check configuration group {q0,n} may have N pre-configured groups of configuration to form one check configuration group table, and is indicated by adding the indication field of log2 N bits in the MAC CE or DCI, for example, N=4 in above Table 1.

In Sb-1 and Sb-2, the Sb-1 and Sb-2 are performed within the measurement time of the K1 time units. The network device may directly acquire the transmit beam and the corresponding L 1-RSRP within each time unit through beam sweeping process. Since the beam management does not support that the terminal device reports the optimal receive beam(s), that is, the optimal beam selection of the terminal device is transparent to the network device, it is necessary to report the optimal receive beam index(es) in the Sb-2 process to support the network device to acquire the optimal beam pair index(es). Since the network side is only necessary to know the serial number of the receive beam index(es) reported by the terminal device, and is not necessary to know the corresponding binding relationship between the optimal receive beam index(es) and the optimal receive beam(s) actually used, a field for indicating the optimal receive beam index(es) may be added to the uplink control information (UCI). For example, when there are 4 candidate receive beams, 2 bits are used to indicate the serial number of the optimal receive beam index(es).

In Sb-3, the network device directly acquires, through the output of the first network model, the transmit beam index(es) that should be adopted by the network side and the receive beam index(es) that should be adopted by the terminal side within the next F1 time units.

In Sb-4, the network device instructs to the terminal device the optimal receive beam(s) that should be adopted. The network device may instruct to the terminal device by adding an information field for indicating the optimal receive beam index(es) in the DCI, and the terminal device performs reception according to the receive beam(s) corresponding to the optimal receive beam index(es).

In Sb-5, the terminal device reports the L1-RSRP at the moment of the checkpoint, according to the Sa-0 configuration.

In Sb-6, the network side performs link quality check. The calculation way of link quality threshold and the value of X in the check process are determined by the network side. If the check is failed, Sa-7 to Sa-9 processes are triggered.

In Sb-7, the network device indicates that the link quality information check is failed through the DCI, and the fallback is required for beam sweeping.

In Sb-8, beam sweeping is performed within the fallback time, to reselect the optimal transmit beam(s) and the optimal receive beam(s).

In Sb-9, the terminal device reports the optimal transmit beam(s) and the corresponding L1-RSRP within the fallback time.

Specifically, the Sb-8 and Sb-9 processes are repeated until the next checkpoint.

It should be noted that the embodiment that the optimal transmit beam(s) is/are taken as the input and output of the first network model may be better compatible with the beam management protocol, and is only necessary to periodically trigger the P3 process based on the optimal transmit beam(s) output by the first network model at the network side. The embodiment that the optimal beam pair(s) is/are taken as the input and output of the first network model is necessary to add the reporting and indication of the optimal receive beam index(es) to the beam management protocol, but is not required the additional P3 process to achieve optimal receive beam pair matching. However, under different input configurations, the link quality check-based processes are compatible with the AI model inference and check method at the network side, and may share a set of signaling processes.

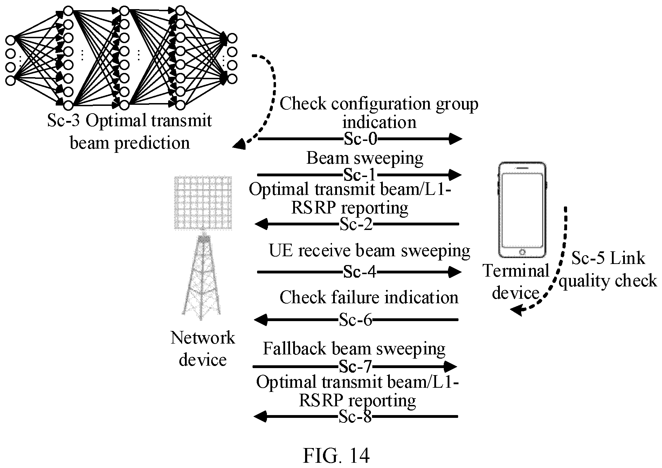

Embodiment III, inference and prediction is performed based on the first network model at the network side, and check is performed at the terminal side. As illustrated in FIG. 14, the network side deploys the first network model, takes the link measurement information (L1-RSRP) and the optimal transmit beam(s) of the past K1 time units as the input, takes the optimal transmit beam(s) of the next F1 time units as the output, and implements check for the checkpoints at the terminal side. Specifically, check and prediction may be implemented through the following Sc-0 to Sc-8.

In Sc-0, the network device instructs the checkpoint configuration to the terminal device through the MAC CE or DCI. Specifically, the check configuration group {q0,n} may have N pre-configured groups of configuration to form one check configuration group table, and is indicated by adding the indication field of log2 N bits in the MAC CE or DCI, for example, N=4 in above Table 1.

In Sc-1 and Sc-2, the Sc-1 and Sc-2 are performed within the measurement time of the K1 time units. The network device may directly acquire the transmit beam and the corresponding L1-RSRP within each time unit through beam sweeping process, and take as the input of the first network model.

In Sc-3, the network device directly acquires, through the output of the first network model, the transmit beam(s) that should be adopted by the network side within the next F1 time units, however, the terminal device cannot acquire the receive beam information that should be adopted within the next F1 time units.

In Sc-4, thus, the Sc-4 is performed within the next F1 time units to determine the optimal receive beam(s) at the terminal side. Specifically, the network device may trigger a periodic terminal device receive beam sweeping process (P3 process): transmitting a CSI-RS resource set whose repetitions are set to ON, that is, all CSI-RS resources in the CSI-RS resource set are transmitted by using the transmit beam of the f-th moment predicted by the first network model. The terminal device measures the CSI-RSs through different receive beams and selects the optimal receive beam.

In Sc-5, the terminal device locally implements check for the link quality, according to the Sc-0 configuration. The calculation way of link quality threshold and the value of X in the check process are configured by the network side indication. Optionally, since the terminal device may also acquire the link quality information of the past K1 time units, the link quality threshold and the value of X may also be determined by the terminal device.

In Sc-6, the terminal device reports the link quality information check failure indication through the UCI, and the fallback is required for beam sweeping.

In Sc-7, beam sweeping is performed within the fallback time, to reselect the optimal transmit beam(s) and the optimal receive beam(s).

In Sc-8, the terminal device reports the optimal transmit beam(s) and the corresponding L1-RSRP within the fallback time.

Specifically, the Sc-7 and Sc-8 processes are repeated until the next checkpoint.

Embodiment IV, inference and prediction is performed based on the first network model at the network side, and check is performed at the terminal side. The network side deploys the first network model, takes the link measurement information (L1-RSRP) and the optimal beam pair(s) of the past K1 time units as the input, takes the optimal beam pair(s) of the next F1 time units as the output, and implements check for the checkpoints at the terminal side. Specifically, check and prediction may be implemented through the following Sd-0 to Sd-8.

In Sd-0, the network device instructs the checkpoint configuration to the terminal device through the MAC CE or DCI. Specifically, the check configuration group {q0,n} may have N pre-configured groups of configuration to form one check configuration group table, and is indicated by adding the indication field of log2 N bits in the MAC CE or DCI, for example, N=4 in above Table 1.

In Sd-1 and Sd-2, Sd-1 and Sd-2 are performed within the measurement time of the K1 time units. The network device may directly acquire the transmit beam and the corresponding L1-RSRP within each time unit through beam sweeping process. Since the beam management does not support that the terminal device reports the optimal receive beam(s), that is, the optimal beam selection of the terminal device is transparent to the network device, it is necessary to report the optimal receive beam index(es) in the Sd-2 process to support the network device to acquire the optimal beam pair index(es). Since the network side is only necessary to know the serial number of the receive beam index(es) reported by the terminal device, and is not necessary to know the corresponding binding relationship between the optimal receive beam index(es) and the optimal receive beam(s) actually used, a field for indicating the optimal receive beam index(es) may be added to the UCI. For example, when there are 4 candidate receive beams, 2 bits are used to indicate the serial number of the optimal receive beam index(es).

In Sd-3, the network device directly acquires, through the output of the first network model, the transmit beam index(es) that should be adopted by the network side and the receive beam index(es) that should be adopted by the terminal side within the next F1 time units.

In Sd-4, the network device instructs to the terminal device the optimal receive beam(s) that should be adopted. The network device may instruct to the terminal device by adding an information field for indicating the optimal receive beam index(es) in the DCI, and the terminal device performs reception according to the receive beam(s) corresponding to the optimal receive beam index(es).

In Sd-5, the terminal device locally implements check for the link quality, according to the Sd-0 configuration. The calculation way of link quality threshold and the value of X in the check process are configured by the network side indication. Optionally, since the terminal device may also acquire the link quality information of the past K1 time units, the link quality threshold and the value of X may also be determined by the terminal device.

In Sb-6, the terminal device reports the link quality information check failure indication through the UCI, and the fallback is required for beam sweeping.

In Sd-7, beam sweeping is performed within the fallback time, to reselect the optimal transmit beam(s) and the optimal receive beam(s).

In Sd-8, the terminal device reports the optimal transmit beam(s) and the corresponding L1-RSRP within the fallback time.

Specifically, the Sd-7 and Sd-8 processes are repeated until the next checkpoint.

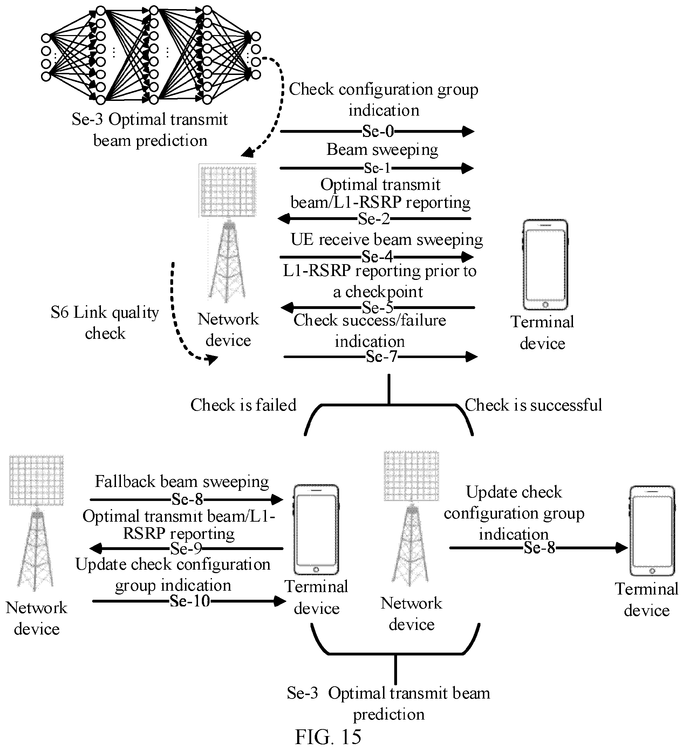

Embodiment V, inference and prediction is performed based on the first network model at the network side, and check is performed at the network side. As illustrated in FIG. 15, in the link quality check-based dynamic beam management fallback mechanism, the network side deploys the first network model, takes the link measurement information (L1-RSRP) and the optimal transmit beam(s) of the past K1 time units as the input, takes the optimal transmit beam(s) of the next F1 time units as the output, and implements the check for the checkpoint at the network side. Specifically, check and prediction may be implemented through the following Se-0 to Se-10.

In Se-0, the network device instructs the checkpoint configuration to the terminal device through the MAC CE or DCI. Specifically, the check configuration group {q0, n} may be dynamically configured based on the mobility of the terminal device, or dynamically configured based on the check results within the plurality of past time units.

In Se-1 and Se-2, the Se-1 and Se-2 are performed within the measurement time of the K1 time units. The network device may directly acquire the transmit beam and the corresponding L1-RSRP within each time unit through beam sweeping process, and take as the input of the first network model.

In Se-3, the network device directly acquires, through the output of the first network model, the transmit beam(s) that should be adopted by the network side within the next F1 time units, however, the terminal device cannot acquire the receive beam information that should be adopted within the next F1 time units.

In Se-4, thus, the Se-4 is performed within the next F1 time units to determine the optimal receive beam(s) at the terminal side. Specifically, the network device may trigger a periodic terminal device receive beam sweeping process (P3 process): transmitting a CSI-RS resource set whose repetitions are set to ON, that is, all CSI-RS resources in the CSI-RS resource set are transmitted by using the transmit beam of the f-th moment predicted by the first network model. The terminal device measures the CSI-RSs through different receive beams and selects the optimal receive beam.

In Se-5, the terminal device reports the link quality information of all predicted time units prior to the checkpoint q0 to the network device for dynamically updating the measurement time and the prediction time, so as to determine the input of the updated first network model.

In Se-6, the network side performs link quality check. The calculation way of link quality threshold and the value of X in the check process are determined by the network side, and the network device dynamically updates the measurement time and prediction time according to the check result, so as to determine the updated input of the first network model.

In Se-7, the network device instructs to the terminal device whether the check is successful or failed. When the check is failed, the fallback time is arrived and the check configuration group {q0, n} indication is updated after the fallback beam sweeping is finished. When the check is successful, the check configuration group {q0, n} indication is directly updated. Finally, dynamical updating of the measurement time and the prediction time are finished in the above two cases, and the optimal transmit beam prediction is re-performed by using the first network model at the network side.

In Se-8, when the check is failed, beam sweeping is performed within the fallback time, to reselect the optimal transmit beam(s) and the optimal receive beam(s). When the check is successful, the check configuration group {q0,n} indication is directly updated.

In Se-9: the terminal device reports the optimal transmit beam(s) and the corresponding L 1-RSRP within the fallback time.

In Se-10, the network device updates the check configuration group {q0, n} indication after the fallback beam sweeping is finished.

Embodiment VI, inference and prediction is performed based on the first network model at the network side, and check is performed at the network side. In the link quality check-based dynamic beam management fallback mechanism, the network side deploys the first network model, takes the link measurement information (L1-RSRP) and the optimal beam pair(s) of the past K1 time units as the input, takes the optimal beam pair(s) of the next F1 time units as the output, and implements the check for the checkpoint at the network side. Specifically, check and prediction may be implemented through the following Sf-0 to Sf-10.

In Sf-0, the network device instructs the checkpoint configuration to the terminal device through the MAC CE or DCI. Specifically, the check configuration group {q0, n} may be dynamically configured based on the mobility of the terminal device, or dynamically configured based on the check results within the plurality of past time units.

In Sf-1 and Sf-2, the Sf-1 and Sf-2 are performed within the measurement time of the K1 time units. The network device may directly acquire the transmit beam and the corresponding L1-RSRP within each time unit through beam sweeping process, and take as the input of the first network model. Since the beam management does not support that the terminal device reports the optimal receive beam(s), that is, the optimal beam selection of the terminal device is transparent to the network device, it is necessary to report the optimal receive beam index(es) in the Sf-2 process to support the network device to acquire the optimal beam pair index(es). Since the network side is only necessary to know the serial number of the receive beam index(es) reported by the terminal device, and is not necessary to know the corresponding binding relationship between the optimal receive beam index(es) and the optimal receive beam(s) actually used, a field for indicating the optimal receive beam index(es) may be added to the UCI. For example, when there are 4 candidate receive beams, 2 bits are used to indicate the serial number of the optimal receive beam index(es).

In Sf-3, the network device directly acquires, through the output of the first network model, the transmit beam index(es) that should be adopted by the network side and the receive beam index(es) that should be adopted by the terminal side within the next F1 time units.

In Sf-4, the network device instructs to the terminal device the optimal receive beam(s) that should be adopted. The network device may instruct to the terminal device by adding an information field for indicating the optimal receive beam index(es) in the DCI, and the terminal device performs reception according to the receive beam(s) corresponding to the optimal receive beam index(es).

In Sf-5, the terminal device reports the link quality information of all predicted time units prior to the checkpoint q0 to the network device for dynamically updating the measurement time and the prediction time, so as to determine the input of the updated first network model.

In Sf-6, the network side performs link quality check. The calculation way of link quality threshold and the value of X in the check process are determined by the network side, and the network device dynamically updates the measurement time and prediction time according to the check result, so as to determine the input of the updated first network model.

In Sf-7, the network device instructs to the terminal device whether the check is successful or failed. When the check is failed, the fallback time is arrived and the check configuration group {q0, n} indication is updated after the fallback beam sweeping is finished. when the check is successful, the check configuration group {q0, n} indication is directly updated. Finally, dynamical updating of the measurement time and the prediction time are finished in the above two cases, and the optimal transmit beam prediction is re-performed by using the first network model at the network side.

In Sf-8, when the check is failed, beam sweeping is performed within the fallback time, to reselect the optimal transmit beam(s) and the optimal receive beam(s). When the check is successful, the check configuration group {q0,n} indication is directly updated.

In Sf-9, the terminal device reports the optimal beam pair(s) and the corresponding L1-RSRP within the fallback time.

In Sf-10, the network device updates the check configuration group {q0, n} indication after the fallback beam sweeping is finished.

Embodiment VII, inference and prediction is performed based on the first network model at the network side, and check is performed at the terminal side. In the link quality check-based dynamic beam management fallback mechanism, the network side deploys the first network model, takes the link measurement information (L1-RSRP) and the optimal transmit beam(s) of the past K1 time units as the input, takes the optimal transmit beam(s) of the next F1 time units as the output, and implements the check for the checkpoint at the terminal side. Specifically, check and prediction may be implemented through the following Sg-0 to Sg-10.

In Sg-0, the network device instructs the checkpoint configuration to the terminal device through the MAC CE or DCI. Specifically, the check configuration group {q0, n} may be dynamically configured based on the mobility of the terminal device, or dynamically configured based on the check results within the plurality of past time units.

In Sg-1 and Sg-2, the Sg-1 and Sg-2 are performed within the measurement time of the K1 time units. The network device may directly acquire the transmit beam and the corresponding L1-RSRP within each time unit through beam sweeping process, and take as the input of the first network model.

In Sg-3, the network device directly acquires, through the output of the first network model, the transmit beam(s) that should be adopted by the network side within the next F1 time units, however, the terminal device cannot acquire the receive beam information that should be adopted within the next F1 time units.

In Sg-4, thus, the Se-4 is performed within the next F1 time units to determine the optimal receive beam(s) at the terminal side. Specifically, the network device may trigger a periodic terminal device receive beam sweeping process (P3 process): transmitting a CSI-RS resource set whose repetitions are set to ON, that is, all CSI-RS resources in the CSI-RS resource set are transmitted by using the transmit beam of the f-th moment predicted by the first network model. The terminal device measures the CSI-RSs through different receive beams and selects the optimal receive beam.

In Sg-5, the terminal device reports the link quality information of all predicted time units prior to the checkpoint q0 to the network device for dynamically updating the measurement time and the prediction time, so as to determine the input of the updated first network model. The network device dynamically updates the measurement time and prediction time according to the check result, so as to determine the input of the updated first network model.

In Sg-6, the terminal device locally implements check for the link quality. The calculation way of link quality threshold and the value of X in the check process are configured by the network side indication. Optionally, since the terminal device may also acquire the link quality information of the past K1 time units, the link quality threshold and the value of X may also be determined by the terminal device.

In Sg-7, the network device instructs to the terminal device whether the check is successful or failed. When the check is failed, the fallback time is arrived and the check configuration group {q0, n} indication is updated after the fallback beam sweeping is finished. When the check is successful, the check configuration group {q0, n} indication is directly updated. Finally, dynamical updating of the measurement time and the prediction time are finished in the above two cases, and optimal transmit beam prediction is re-performed by using the first network model at the network side.

In Sg-8, when the check is failed, beam sweeping is performed within the fallback time, to reselect the optimal transmit beam(s) and the optimal receive beam(s). When the check is successful, the check configuration group {q0,n} indication is directly updated.

In Sg-9, the terminal device reports the optimal transmit beam(s) and the corresponding L1-RSRP within the fallback time.

In Sg-10, the network device updates the check configuration group {q0, n} indication after the fallback beam sweeping is finished.

Embodiment VIII, inference and prediction is performed based on the first network model at the network side, and check is performed at the terminal side. In the link quality check-based dynamic beam management fallback mechanism, the network side deploys the first network model, takes the link measurement information (L1-RSRP) and the optimal beam pair(s) of the past K1 time units as the input, takes the optimal pair(s) of the next F1 time units as the output, and implements the check for the checkpoint at the terminal side. Specifically, check and prediction may be implemented through the following Sh-0 to Sh-10.

In Sh-0, the network device instructs the checkpoint configuration to the terminal device through the MAC CE or DCI. Specifically, the check configuration group {q0, n} may be dynamically configured based on the mobility of the terminal device, or dynamically configured based on the check results within the plurality of past time units.

In Sh-1 and Sh-2, the Sh-1 and Sh-2 are performed within the measurement time of the K1 time units. The network device may directly acquire the transmit beam and the corresponding L1-RSRP within each time unit through beam sweeping process. Since the beam management does not support that the terminal device reports the optimal receive beam(s), that is, the optimal beam selection of the terminal device is transparent to the network device, it is necessary to report the optimal receive beam index(es) in the Sh-2 process to support the network device to acquire the optimal beam pair index(es). Since the network side is only necessary to know the serial number of the receive beam index(es) reported by the terminal device, and is not necessary to know the corresponding binding relationship between the optimal receive beam index(es) and the optimal receive beam(s) actually used, a field for indicating the optimal receive beam index(es) may be added to the UCI. For example, when there are 4 candidate receive beams, 2 bits are used to indicate the serial number of the optimal receive beam index(es).

In Sh-3, the network device directly acquires, through the output of the first network model, the transmit beam index(es) that should be adopted by the network side and the receive beam index(es) that should be adopted by the terminal side within the next F1 time units.

In Sh-4, the network device instructs to the terminal device the optimal receive beam(s) that should be adopted. The network device may instruct to the terminal device by adding an information field for indicating the optimal receive beam index(es) in the DCI, and the terminal device performs reception according to the receive beam(s) corresponding to the optimal receive beam index(es).

In Sh-5, the terminal device reports the link quality information of all predicted time units prior to the checkpoint q0 to the network device for dynamically updating the measurement time and the prediction time, so as to determine the input of the updated first network model. The network device dynamically updates the measurement time and prediction time according to the check result, so as to determine the input of the updated first network model.

In Sh-6, the terminal device locally implements check for the link quality. The calculation way of link quality threshold and the value of X in the check process are configured by the network side indication. Optionally, since the terminal device may also acquire the link quality information of the past K1 time units, the link quality threshold and the value of X may also be determined by the terminal device.

In Sh-7, the network device instructs to the terminal device whether the check is successful or failed. When the check is failed, the fallback time is arrived and the check configuration group {q0, n} indication is updated after the fallback beam sweeping is finished. When the check is successful, the check configuration group {q0, n} indication is directly updated. Finally, dynamical updating of the measurement time and the prediction time are finished in the above two cases, and optimal transmit beam prediction is re-performed by using the first network model at the network side.

In Sh-8, when the check is failed, beam sweeping is performed within the fallback time, to reselect the optimal transmit beam(s) and the optimal receive beam(s). When the check is successful, the check configuration group {q0,n} indication is directly updated.

In Sh-9, the terminal device reports the optimal transmit beam(s) and the corresponding L1-RSRP within the fallback time.

In Sh-10, the network device updates the check configuration group {q0, n} indication after the fallback beam sweeping is finished.

Therefore, in the embodiments of the present disclosure, the network device implements time domain prediction of spatial filter based on the first network model, as well as checks predicted spatial filters based on link quality and determines spatial filters to be used by means of spatial filter sweeping within a certain period of time after the check is failed, so as to achieve real-time monitoring on link quality based on AI model prediction, ensure performance of matched spatial filters between the network device and the terminal device. As such, while reducing overhead of spatial filter measurement and feedback required for spatial filter tracking during movement of the terminal device and reducing switching delay between the spatial filters, stability of the link quality is ensured. In this way, degradation on spatial filter quality caused by prediction errors of the AI model is avoided, and better performance of the time domain prediction of the spatial filter is achieved.

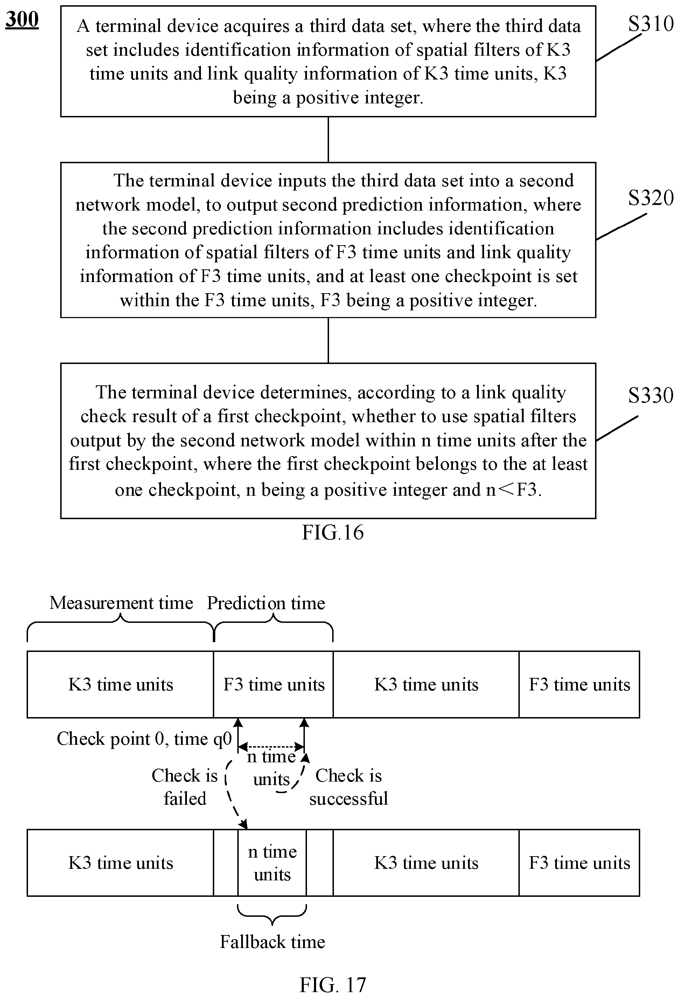

FIG. 16 is a schematic flowchart of a wireless communication method 300 in accordance with embodiments of the present disclosure. The wireless communication method 300 may be performed by a terminal device in the communication system illustrated in FIG. 1. As illustrated in FIG. 16, the wireless communication method 300 includes at least part of the following contents:

In S310, a terminal device acquires a third data set, where the third data set includes identification information of spatial filters of K3 time units and link quality information of K3 time units, K3 being a positive integer.

In S320, the terminal device inputs the third data set into a second network model, to output second prediction information, where the second prediction information includes identification information of spatial filters of F3 time units and link quality information of F3 time units, and at least one checkpoint is set within the F3 time units, F3 being a positive integer.

In S330, the terminal device determines, according to a link quality check result of a first checkpoint, whether to use spatial filters output by the second network model within n time units after the first checkpoint, where the first checkpoint belongs to the at least one checkpoint, n being a positive integer and n being less than F3 (that is, n<F3).

In the embodiments of the present disclosure, the spatial filter may also be referred to as a beam, or a spatial relation, or a spatial setting, or a spatial domain filter, or a reference signal.

In the embodiments of the present disclosure, the first checkpoint may be any one of the at least one checkpoint, and the terminal device or a network device performs link quality check at the at least one checkpoint in turn.

In the embodiments of the present disclosure, one time unit corresponds to identification information of one spatial filter and one piece of link quality information, where the one piece of link quality information may be link quality information measured under the one spatial filter. That is, in the third data set, the K3 time units correspond to identification information of the K3 spatial filters and K3 pieces of link quality information, respectively; and in the second prediction information, the F3 time units correspond to identification information of the F3 spatial filters and F3 pieces of link quality information, respectively.

In the embodiments of the present disclosure, when beam time domain prediction is performed based on the AI model (i.e., the second network model), it is determined whether link quality of optimal transmit beams or optimal beam pairs predicted by the AI model within the within F3 time units meets a standard through setting a link quality threshold either on the network side or the terminal side. When prediction results of the AI model do not meet the standard, a reasonable beam management fallback mechanism is designed, to enable the network device and the terminal device may match correct beam pairs. According to the present disclosure, while reducing the overhead of beam management during performing beam time domain prediction based on the AI model, the stability of the link quality is ensured.

In some embodiments, the time unit may include, but is not limited to, one of: a slot, a frame, a subframe, a symbol, a millisecond, or a microsecond.

In some embodiments, the spatial filter includes one optimal receiving spatial filter (such as an optimal receive beam), or the spatial filter includes one optimal transmitting spatial filter (such as an optimal transmit beam), or the spatial filters include one optimal transmitting spatial filter and one optimal receiving spatial filter (such as a beam pair consisting of an optimal transmit beam and an optimal receive beam).

In some embodiments, the transmitting spatial filter may also be referred to as a transmit beam (Tx beam) or a transmitting-end spatial domain filter, and the above terms may be replaced with each other.

In some embodiments, the receiving spatial filter may also be referred to as a receive beam (Rx beam) or a receiving-end spatial domain filter, and the above terms may be replaced with each other.

In some embodiments, a combination of the transmitting spatial filter and the receiving spatial filter may also be referred to as a beam pair, a spatial filter pair, or a spatial filter group, and the above terms may be replaced with each other.

In some embodiments, the identification information of the spatial filter may be an index or an identifier of the spatial filter.

For example, the identification information of the transmitting spatial filter may be an index or an identifier of the transmitting spatial filter.

For another example, the identification information of the receiving spatial filter may be an index or an identifier of the receiving spatial filter.

For yet another example, the identification information of the combination of the transmitting spatial filter and the receiving spatial filter may be an index of the combination.

In some embodiments, the link quality information may include, but is not limited to, at least one of:
layer 1 reference signal receiving power (L1-RSRP), layer 1 reference signal receiving quality (L1-RSRQ), or a layer 1 signal to interference plus noise ratio (L1-SINR).

In some embodiments, in a case where the spatial filters include an optimal transmitting spatial filter, the third data set is acquired by the terminal device by means of spatial filter sweeping. For example, the terminal device acquires the identification information of the optimal receiving spatial filters of the K3 time units by means of spatial filter sweeping, and takes the link measurement information and the identification information of the optimal receiving spatial filters of the past K3 time units as the third data set.

In some embodiments, in a case where the spatial filters include an optimal transmitting spatial filter, the third data set is acquired by the network device by means of spatial filter sweeping, and indicated to the terminal device. That is, the third data set is acquired from the network device. For example, the network device acquires the identification information of the optimal transmitting spatial filters of the K3 time units by means of spatial filter sweeping, and takes the link measurement information and the identification information of the optimal transmitting spatial filters of the past K3 time units as the third data set.

In some embodiments, in a case where the spatial filters include an optimal transmitting spatial filter and an optimal receiving spatial filter, the third data set is acquired by the terminal device based on identification information of optimal transmitting spatial filters indicated by the network device, and optimal receiving spatial filters determined by means of spatial filter sweeping. Specifically, for example, the network device indicates the identification information of the optimal transmitting spatial filters of the past K3 time units, the terminal device acquires the identification information of the optimal receiving spatial filters of the K3 time units by means of spatial filter sweeping, and takes the link measurement information, the identification information of the optimal transmitting spatial filters and the identification information of the optimal receiving spatial filters of the past K3 time units as the third data set.

In some embodiments, different checkpoints are separated by the n time units in a case where a number of the at least one checkpoint is greater than or equal to 2. Certainly, intervals between different checkpoints may also be different. For example, the interval between checkpoint 1 and checkpoint 2 is n1 time units, and the interval between checkpoint 2 and checkpoint 3 is n2 time units. It may be determined whether to use the spatial filters output by the second network model within the subsequent n1 time units based on the check result of checkpoint 1, it may be determined whether to use the spatial filters output by the second network model within the subsequent n2 time units based on the check result of checkpoint 2, and so on.

In some embodiments, the S330 may specifically include the following operations.

The terminal device uses the spatial filters output by the second network model within the n time units after the first checkpoint in a case where a link quality check for the first checkpoint is successful; and/or the terminal device determines spatial filters to be used by means of spatial filter sweeping within the n time units after the first checkpoint in a case where a link quality check for the first checkpoint is failed.

In some embodiments, the K3 time units and the F3 time units may be consecutive time units. Specifically, for example, the F3 time units are consecutive F1 time units after the K3 time units.

In some embodiments, the K3 time units may be measurement time, and the F3 time units may be prediction time.

In some embodiments, K3 is greater or equal than F3 (that is, K3 ≥ F3). Optionally, the specific values of K3 and F3 may be configured by the network device, or the specific values of K3 and F3 may be agreed upon by a protocol. Optionally, the specific values of K3 and F3 may be determined by model parameters of the second network model.

In some embodiments, the link quality check result of the first checkpoint is determined based on link quality information of the first checkpoint and a link quality threshold.

Where the link quality information of the first checkpoint is: link quality information measured by the terminal device using an optimal receiving spatial filter corresponding to the first checkpoint when the network device transmits a reference signal using an optimal transmitting spatial filter corresponding to the first checkpoint.

In some embodiments, the reference signal may be a CSI-RS or an SSB.

In some embodiments, the optimal receiving spatial filter corresponding to the first checkpoint may be an optimal receiving spatial filter of the time unit to which the first checkpoint belongs predicted by the second network model. The terminal device may report the optimal receiving spatial filter corresponding to the first checkpoint to the network device.

In some embodiments, the optimal transmitting spatial filter corresponding to the first checkpoint may be an optimal transmitting spatial filter of the time unit to which the first checkpoint belongs predicted by the second network model. The terminal device may report the optimal transmitting spatial filter corresponding to the first checkpoint to the network device.

In some embodiments, the optimal transmitting spatial filter corresponding to the first checkpoint may be an optimal transmitting spatial filter of the time unit to which the first checkpoint belongs indicated by the network device.

Specifically, the link quality check for the first checkpoint is successful in a case where the link quality information of the first checkpoint is greater than or equal to the link quality threshold; and/or the link quality check for the first checkpoint is failed in a case where the link quality information of the first checkpoint is less than the link quality threshold.

Specifically, for example, at the checkpoint q0, the network side or terminal side compares the link quality r0 after the terminal device accesses the spatial filter (such as the transmit beam, receive beam or beam pair) of the time unit to which the checkpoint q0 belongs based on the link quality threshold (r_th). When r0 is greater or equal than r_th (that is, r0≥r_th), the check is successful. When r0 is less than r_th (that is, r0<r_th), the check is failed, which indicates that the spatial filter of the time unit to which the checkpoint q0 belongs predicted by the second network model may occur wrong.

The check is successful: when the check for the checkpoint q0 is successful, the spatial filter prediction results of the second network model may be continued to use within the subsequent n time units (including the time unit in which the checkpoint q0 is located), to achieve rapid access between the terminal device and the network device until the next checkpoint is encountered.

The check is failed: when the check for the checkpoint q0 is failed, the spatial filter prediction results of the subsequent n time units (including the time unit in which the checkpoint q0 is located) are considered unreliable, and the network device and terminal device cannot directly access the corresponding spatial filter (the beam or beam pair) through the prediction results of the second network model. Therefore, a period from the checkpoint q0 to the next checkpoint, that is, the n time units after the checkpoint q0, will be set as a fallback period. Within the fallback period, matching of the beam pairs and access of the terminal devices may be achieved by adopting traditional beam management manners through beam measurement and reporting. Until the next checkpoint of the checkpoint q0, if the check is successful, the beam prediction results of the second network model are restored to adopt. If the check is still failed, the above process is repeated until the next one of the next checkpoint, or the F3 time units (i.e. the prediction time) are over.

Under the link quality check-based beam management fallback mechanism proposed in the present disclosure, the check configuration group {q0, n} may significantly affect the performance of the solution. When n is configured too large, the check density is too low, which may cause the spatial filter predicted by the second network model to be undetected when it is wrong. However, when n is configured too small, the check density is too high, which may cause additional check signaling overhead. Therefore, the check configuration group may be dynamically configured by the network device or the terminal device according to the actual situations.

In some embodiments, the optimal receiving spatial filter corresponding to the first checkpoint is determined by the terminal device based on the optimal transmitting spatial filter corresponding to the first checkpoint. Specifically, for example, the network device may trigger a periodic terminal device receiving spatial filter sweeping process (i.e., the P3 process illustrate in FIG. 7): transmitting a CSI-RS resource set whose repetitions are set to open or ON, that is, all CSI-RS resources in the CSI-RS resource set are transmitted by using the optimal transmitting spatial filter corresponding to the first checkpoint predicted by the second network model, and the terminal device measures the CSI-RSs through different receiving spatial filters and selects the optimal receiving spatial filter.

In some embodiments, the optimal transmitting spatial filter corresponding to the first checkpoint is instructed to the network device by the terminal device. Specifically, for example, in the case where the spatial filters include an optimal transmitting spatial filter and an optimal receiving spatial filter, the terminal device may report the optimal receiving spatial filter of the time unit to which the first checkpoint belongs predicted by the second network model to the network device.

In some embodiments, the optimal transmitting spatial filter corresponding to the first checkpoint is instructed to the terminal device by the network device.

In some embodiments, the link quality check result of the first checkpoint is determined by the network device based on the link quality information of the first checkpoint and the link quality threshold reported by the terminal device. That is, the check may be performed by the network device.

In some embodiments, the link quality check result of the first checkpoint is determined by the terminal device based on the link quality information of the first checkpoint and the link quality threshold, and reported to the network device. That is, the check may be performed by the terminal device.

In some embodiments, the link quality threshold is determined based on an average value or a weighted average value of the link quality information of the K3 time units.

In some embodiments, the link quality threshold is determined based on the following formula 3:

$$r\_th = (Q_1 + Q_2 + \ldots + Q_{K3})/K3 - X \qquad \text{(formula 3)}$$

Where r_th represents the link quality threshold, $Q_1$ to $Q_{K3}$ represent the link quality information of the K3 time units, respectively; and X represents a link quality threshold offset value. That is, $Q_1$ represents link quality information of a first time unit within the K3 time units, $Q_2$ represents link quality information of a second time unit within the K3 time units, ..., and $Q_{K3}$ represents link quality information of a K3-th time unit within the K3 time units.

In some embodiments, the link quality threshold is determined based on the following formula 4:

$$r\_th = (a_1*Q_1 + a_2*Q_2 + ... + a_{K3}*Q_{K3})/K3 - X \qquad \text{(formula 4)}$$

Where r_th represents the link quality threshold; $Q_1$ to $Q_{K3}$ represent the link quality information of the K3 time units, respectively; $a_1$ to $a_{K3}$ represent weighted weights of the K3 time units, respectively, and $a_1+a_2+...+a_{K3}=1$; and X represents a link quality threshold offset value. That is, $Q_1$ represents link quality information of a first time unit within the K3 time units, $Q_2$ represents link quality information of a second time unit within the K3 time units, ..., and $Q_{K3}$ represents link quality information of a K3-th time unit within the K3 time units. a1 represents a weighted weight of the first time unit within the K3 time units, a2 represents a weighted weight of the second time unit within the K3 time units, ..., and $a_{K3}$ represents a weighted weight of the K3-th time unit within the K3 time units.

In some embodiments, in the formula 4, $a_1<=a_2<=...<= a_{K3}$. This is because the closer the moment is to the checkpoint, the closer the channel environment and link quality of the moment are to these of the checkpoint, and the weighted weight should be greater.

In some embodiments, in the formula 3 and formula 4, a value of X is determined based on the channel quality. Specifically, X is greater than 0 (that is, X>0), the reason for setting X is that, in the actual systems, change of the link quality of the beam may decline to a certain extent as the terminal device moves, and thus, a deviation of the beam quality within a certain range is allowed. If X is not set or is set too low, it may cause that the check is failed every time. Even when the beam or the beam pair predicted by the second network model is correct, a requirement for the link quality threshold cannot be met. Therefore, the value of X may be configured according to the different channel qualities. For example, the channel quality may be evaluated based on the CSI-RSs or the SSBs.

In some embodiments, in the formula 3 and formula 4, the value of X is configured by the network device, or the value of X is configured by the terminal device.

In some embodiments, the link quality threshold is agreed upon by a protocol, or the link quality threshold is configured by the network device.

In some embodiments, the unit of the link quality threshold (r_th) is decibel (dB) or milliwatt decibel (dBm), which is not limited in the present disclosure.

In some embodiments, in a case where the link quality check for the first checkpoint is failed, the terminal device transmits second indication information, where the second indication information is used for indicating that the network device determines spatial filters to be used by means of spatial filter sweeping within the n time units after the first checkpoint.

In some embodiments, the K3 time units may be the measurement time, the F3 time units may be the prediction time, and the K3 time units and the F3 time units may be a complete prediction period.

Specifically, as illustrated in FIG. 17, the terminal device determines whether to use the spatial filters output by the second network model within the n time units after the checkpoint 0 according to the link quality check result of the checkpoint 0, where a starting position of the checkpoint 0 is located at the time unit q0 within the F3 time units. Specifically, for example, when the check for the checkpoint 0 is successful, whether the terminal device uses the spatial filters output by the second network model within the n time units after the checkpoint 0; and when the check for the checkpoint 0 is failed, the terminal device determines the spatial filters to be used by means of spatial filter sweeping within the n time units after the checkpoint 0. That is, when the check for the checkpoint 0 is failed, the matching of the beam pairs and the access of the terminal devices may be achieved by adopting the traditional beam management manners through beam measurement and reporting within the n time units after the checkpoint 0, and the n time units after the checkpoint 0 may also be called as the fallback time or fallback period.

In some embodiments, as illustrated in FIG. 17, one or more checkpoints are set within the F3 time units. A configuration manner of the checkpoint(s) is that a starting position of the 0-th checkpoint is set as the time unit q0, and a check interval between adjacent checkpoints is that n is greater than or equal to 1 (that is, n>=1). Therefore, the check configuration group {q0, n} may determine a check starting time and check density within the F3 time units, and the check configuration group {q0, n} may be configured by the network device or the terminal device.

In some embodiments, a starting position of the at least one checkpoint and a value of n are configured by the network device, or a starting position of the at least one checkpoint and a value of n are agreed upon by a protocol. For example, the network device may instruct checkpoint configuration (including the starting position of the checkpoint and the value of n) to the terminal device through a MAC CE or DCI.

In some embodiments, a starting position of the at least one checkpoint and a value of n are determined by the network device or the terminal device based on a check configuration group; where the check configuration group includes a plurality of check configuration types, and each of the plurality of check configuration types corresponds to a starting position of one checkpoint and one way of assigning value to n.

In some embodiments, the check configuration group is agreed upon by a protocol, or the check configuration group is pre-configured by the network device.

For example, the checkpoint configuration group may be as shown in Table 1 or Table 2.

In the embodiments of the present disclosure, the measurement time of the first K3 time units are statically and periodically spaced from the prediction time of the last F3 time units, as illustrated in FIG. 17. When the moving speed of the terminal device is uneven, or the moving direction of the terminal device changes, it may cause that the prediction of the second network model in time units relatively ahead within prediction time of the last F3 time units has higher accuracy, which enables the network device and the terminal device to be matched to spatial filters that are correct and has better link quality. However, the prediction performance in time units relatively backward may be poor since spatial and temporal correlation between the spatial filters that should be used by the network device and the terminal device within these time units, and the selected spatial filters within measurement time of the previous K3 time units as well as the corresponding link quality measurement results are relatively weak, and the prediction of the second network model in the process of extracting the correlation to generate prediction may be more inaccurate due to the change in the movement patterns of the terminal devices. Specifically, it may cause that the check is always failed at the checkpoints relatively backward within the measurement time of the F3 time units, and the fallback is required for beam sweeping, which may not effectively utilize the second network model to reduce the overhead of beam sweeping and access delay. In this case, the embodiments of the present disclosure further proposes a link quality check-based dynamic beam management fallback mechanism, that is, the measurement time of the K3 time units and the prediction time of the F3 time units are dynamically shifted and updated.

In some embodiments, after the check for the first checkpoint is terminated, the terminal device updates the third data set according to the link quality check result of the first checkpoint; the terminal device inputs a updated third data set into the second network model, to output updated second prediction information, and determines a updated first checkpoint within updated F3 time units included in the updated second prediction information; and the terminal device determines, according to a link quality check result of the updated first checkpoint, whether to use the spatial filters output by the second network model within n time units after the updated first checkpoint within the updated F3 time units.

In some embodiments, in the case where the link quality check for the first checkpoint is successful, updated K3 time units included in the updated third data set include m time units within the F3 time units, and the updated K3 time units do not include first m time units within the K3 time units, and the updated first checkpoint is located at an m-th time unit within the updated F3 time units; where the m time units within the F3 time units are a time unit to which the first checkpoint belongs and time units before the time unit to which the first check point belongs, within the F3 time units, m being a positive integer.

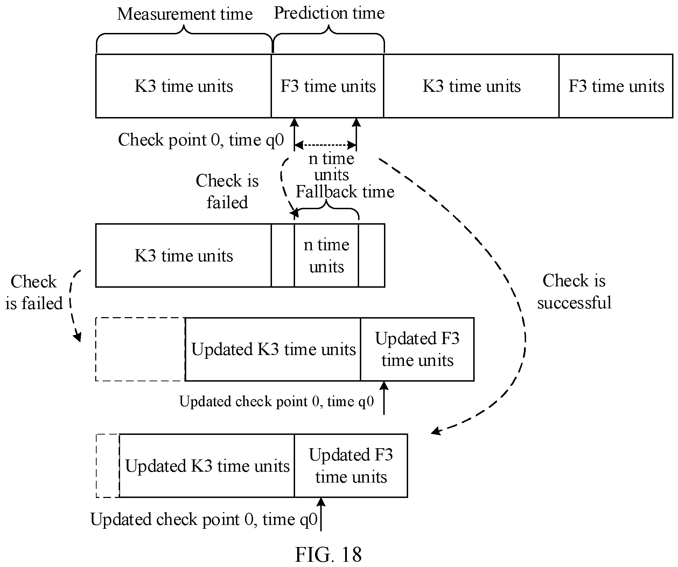

Specifically, for example, it is assumed that the first checkpoint is the checkpoint 0, when the check is successful at the checkpoint 0 (located in the q0-th time unit within the F3 time units): considering that all spatial filter prediction results before the checkpoint 0 are correct, which enables the network device and the terminal device to be paired normally. At this time, the measurement time and the prediction time will be shifted and updated. As illustrated in FIG. 18, link quality information and the predicted spatial filters of first q0 time units within the prediction time are also used as input of the second network model, and link quality information and identification information of spatial filters of earliest q0 time units within the past K3 time units included in the third data set are discarded, and identification information and link quality information of spatial filters of the updated K3 time units are re-input into the second network model, to obtain updated prediction results of the second network model of future F3 time units. At the same time, the checkpoint 0 and the corresponding q0-th time unit are updated.

In some embodiments, in the case where the link quality check for the first checkpoint is failed, updated K3 time units included in the updated third data set include m+n time units within the F3 time units, and the updated K3 time units do not include first m+n time units within the K3 time units, and the updated first checkpoint is located at an m+n-th time unit within the updated F3 time units; where the m time units within the F3 time units are a time unit to which the first checkpoint belongs and time units before the time unit to which the first check point belongs, within the F3 time units, and m being a positive integer.

Specifically, for example, it is assumed that the first checkpoint is checkpoint 0, when the check is failed at the checkpoint 0 (located in the q0-th time unit within the F3 time units): n time units after the checkpoint 0 (including the q0-th time unit) enter the fallback time, and the beam pair between the network device and the terminal device are matched by adopting the traditional beam management manners. At this time, the measurement time and the prediction time are also shifted and updated. As illustrated in FIG. 18, link quality information and the predicted spatial filters of the first q0+n time units within the prediction time are taken as input of the second network model, and link quality information and identification information of spatial filters of earliest q0+n time units within the past K3 time units included in the third data set are discarded, and identification information and link quality information of spatial filters of the updated K3 time units are re-input into the second network model, to obtain updated prediction results of the first network model of future F3 time units. At the same time, the checkpoint 0 and the corresponding q0th time unit are updated.

In the present embodiments, the link quality check-based dynamic beam management fallback mechanism may take the correct and available prediction results of the second network model as the input of the second network model in real time, and update the output results of the second network model in real time, so that the second network model may more accurately predict the spatial filters in the short period of time in the future.

In some embodiments, a starting position of the first checkpoint and a value of n are dynamically configured by the network device based on mobility of the terminal device, or a starting position of the first checkpoint and a value of n are dynamically configured by the terminal device based on check results within a plurality of past time units.

Specifically, for example, in the link quality check-based dynamic beam management fallback mechanism, the starting position of the first checkpoint and the value of n are dynamically configured by the network device based on the mobility of the terminal device, or the starting position of the first checkpoint and the value of n are dynamically configured by the network device based on the check results within the plurality of past time units.

In some embodiments, it is assumed that the starting position of the first checkpoint is q0, the check configuration group of {q0, n} also significantly affects the performance of the solutions of the present embodiment, especially the configuration of q0. When the configuration of q0 is small (i.e., the first checkpoint within the F3 time units is too forward, e.g., the check is performed on the first time unit), the optimal prediction performance of the second network model may be ensured, however, the second network model is necessary to perform online inference frequently to update the prediction result. When the configuration of q0 is large, the number of online inferences performed by the second network model is small and one-time prediction result may be used for a long time, however, the stable accuracy of the spatial filters predicted by the second network model cannot be ensured. Considering that the check configuration group {q0,n} is dynamically configured by the MAC CE or DCI, the network device may dynamically adjust the configuration of q0 according to the specific situation of the movement of the terminal device and the check results of the plurality of past time units. When the check results of the plurality of past time units are successful, a larger q0 may be configured to reduce the number of inferences of the second network model. When the check is failed, a smaller q0 may be configured to increase the number of inferences of the second network model, to ensure the prediction performance of the second network model.

In some embodiments, the second network model may be an RNN, for example, RNN-like structures such as LSTM or GRU. Certainly, the second network model may also be other model structures such as DNN or CNN, which is not limited in the present disclosure.

In some embodiments, the second network model may be obtained by using an offline training way, or by using an online training way, or by using a combination way of offline training and online training. For example, the network device first obtains a static training result through the offline training way, further uses the offline trained model to perform optimal beam or beam pair prediction, the network device may continue to collect more measurement data in subsequent measurements and/or reports of the terminal device, and then use the measurement results to continue to perform training on the second network model to optimize the model parameters, so as to achieve better prediction results.

In some embodiments, the second network model is obtained by the terminal device through training.

In some embodiments, the terminal device acquires a fourth data set; where the fourth data set includes at least one of: identification information of spatial filters of K4 time units, link quality information of K4 time units, identification information of spatial filters of F4 time units, or link quality information of F4 time units, K4 and F4 being positive integers; and the terminal device performs training on the second network model according to the fourth data set, to obtain model parameters of the second network model.

In some embodiments, K4 is greater than or equal to K3 (that is, K4$\geq$K3), and/or F4 is greater than or equal to F3 (that is, F4 $\geq$ F3).

In some embodiments, during the model training phase, the input of the second network model may be indexes of beams or beam pairs of the K4 time units and corresponding link quality information, the label may be indexes of beams or beam pairs with optimal link quality (or optimal measurement result) of the F4 time units, and the output may be the indexes of beams or beam pairs with the optimal link quality of the F4 time units.

In some embodiments, the second network model is obtained by other devices through training. Specifically, for example, the terminal device receives the trained model parameter information of the second network model. The other devices may be a network device, a third-party device, or a core network device, which is not limited in the present disclosure.

In some embodiments, the offline training way of the second network model is deployed at the network side or the terminal side, and a constructed data set (i.e., the fourth data set) may include the following parts.

Input: optimal transmit beam indexes or beam pair indexes of the consecutive K4 time units and corresponding link quality information L1-RSRP.

Label: optimal transmit beam indexes or beam pair indexes of the consecutive F4 time units after the consecutive K4 time units of the input, and corresponding link quality information L1-RSRP.

In the offline training process, the above data set is obtained by the network device and the terminal device through performing periodic beam selection of multiple consecutive K4+F4 time units according to the beam management protocol during the movement of the terminal device, and through reporting the data set by the terminal device to the network device.

For the second network model, since the correlation of beam time domain sequence between the measurement time of the past K time units and the prediction time of the next F time units are extracted in the present disclosure, LSTM is used for prediction. The specific structure is illustrated in FIG. 11.

In the offline training process, the second network model may be implemented through directly selecting the optimal transmit beam(s) or beam pair index(s) from the multiple candidate transmit beams or beam pairs, or through predicting the L1-RSRP of all candidate transmit beams or beam pairs and selecting the optimal one(or more) as the output result. The embodiments of the present disclosure can support both implementations. Since the implementation logic of the second method is very direct, but the network complexity is relatively high and the predicted L1-RSRP of other transmit beams or beam pairs cannot be used. As such, the first implementation method is used as an example for description below.

For the training process of the optimal transmit beam index or beam pair index, a cross entropy loss function may be adopted.

A transmit beam index is used as a label: taking 64 candidate transmit beams as an example, the label of the optimal transmit beam is one-hot encoded. For example, the optimal transmit beam is mt, the label may be encoded as [0, .., 0,1,0,..0], and the vector is a vector with a length of 64, where only the mt-th position is 1 and all other positions are 0. The model may be trained by using a multi-class cross entropy loss function.

A beam pair index is used as a label: taking 64 candidate transmit beams, 4 candidate receive beams and a total of 256 candidate beam pairs as an example, the label of the optimal beam pair is one-hot encoded. For example, for the optimal beam pair {mt,nt}, the label may be encoded as [0,..,0,1,0,..0], and the vector is a vector with a length of 256, where only the mt*64+nt-th position is 1 and all other positions are 0. The model may be trained by using the multi-class cross entropy loss function.

Considering that computing power of the network device is usually much better than that of the terminal device, thus, the offline training phase is preferably implemented at the network side.

Specifically, for example, it is assumed that the offline training phase is implemented at the network side, after the offline training of the network device is completed, it is necessary to transmit the offline trained second network model from the network device to the terminal side through model download, to realize online inference and prediction.

The technical solutions of the present disclosure are described in detail below through specific embodiments.

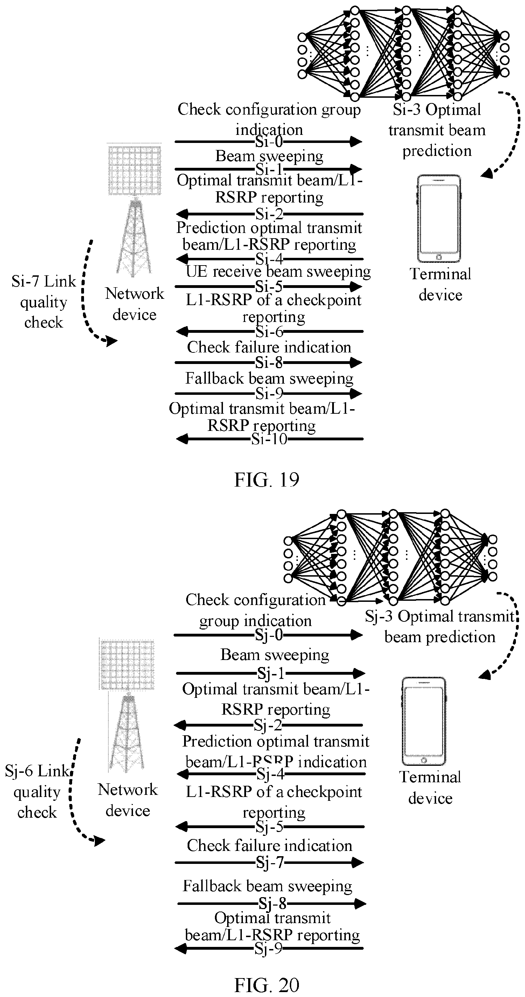

Embodiment IX, inference and prediction is performed based on the first network model at the terminal side, and check is performed at the network side. As illustrated in FIG. 19, the terminal side deploys the first network model, takes the link measurement information (L1-RSRP) and the optimal transmit beam(s) of the past K3 time units as the input, takes the optimal transmit beam(s) of the next F3 time units as the output, and implements check for the checkpoint at the network side. Specifically, check and prediction may be implemented through the following Si-0 to Si-10.

In Si-0, the network device instructs the checkpoint configuration to the terminal device through the MAC CE or DCI. Specifically, the check configuration group {q0,n} may have N pre-configured groups of configuration to form one check configuration group table, and is indicated by adding the indication field of log2 N bits in the MAC CE or DCI, for example, N=4 in above Table 1.

In Si-1 and Si-2, the Si-1 and Si-2 are performed within the measurement time of the K3 time units. The network device may directly acquire the transmit beam and the corresponding L1-RSRP within each time unit through beam sweeping process, and take as the input of the second network model.

In Si-3, the terminal device predicts the optimal transmit beam(s) and corresponding L1-RSRP of the next F3 time units through the second network model.

In Si-4, the terminal device reports the prediction results, that is, the optimal transmit beam(s) and the corresponding L1-RSRP of the F3 time units, to the network device.

In Si-5, thus, the Si-5 is performed within the next F3 time units to determine the optimal receive beam(s) at the terminal side. Specifically, the network device may trigger a periodic terminal device receive beam sweeping process (P3 process): transmitting a CSI-RS resource set whose repetitions are set to ON, that is, all CSI-RS resources in the CSI-RS resource set are transmitted by using the transmit beam of the f-th moment predicted by the second network model. The terminal device measures the CSI-RSs through different receive beams and selects the optimal receive beam.

In Si-6, the terminal device reports the L1-RSRP at the moment of the checkpoint, according to the Si-0 configuration.

In Si-7, the network side performs link quality check. The calculation way of link quality threshold and the value of X in the check process are determined by the network side. If the check is failed, Si-8 to Si-9 processes are triggered.

In Si-8, the network device indicates that the link quality information check is failed through the DCI, and the fallback is required for beam sweeping.

In Si-9, beam sweeping is performed within the fallback time, to reselect the optimal transmit beam(s) and the optimal receive beam(s).

In Si-10, the terminal device reports the optimal transmit beam(s) and the corresponding L1-RSRP within the fallback time.

Specifically, the Si-9 and Si-10 processes are repeated to the next checkpoint.

Embodiment X, inference and prediction is performed based on the second network model at the terminal side, and check is performed at the network side. As illustrated in FIG. 20, the terminal side deploys the second network model, takes the link measurement information (L1-RSRP) and the optimal beam pair(s) of the past K3 time units as the input, takes the optimal beam pair(s) of the next F3 time units as the output, and implements check for the checkpoint at the network side. Specifically, check and prediction may be implemented through the following Sj-0 to Sj-9.

In Sj-0, the network device instructs the checkpoint configuration to the terminal device through the MAC CE or DCI. Specifically, the check configuration group {q0,n} may have N pre-configured groups of configuration to form one check configuration group table, and is indicated by adding the indication field of log2 N bits in the MAC CE or DCI, for example, N=4 in above Table 1.

In Sj-1 and Sj-2, the Sj-1 and Sj-2 are performed within the measurement time of the K3 time units. The network device may directly acquire the transmit beam and the corresponding L1-RSRP within each time unit through beam sweeping process. Since the beam management does not support that the terminal device reports the optimal receive beam(s), that is, the optimal beam selection of the terminal device is transparent to the network device, it is necessary to report the optimal receive beam index(es) in the Sj-2 process to support the network device to acquire the optimal beam pair index(es). Since the network side is only necessary to know the serial number of the receive beam index(es) reported by the terminal device, and is not necessary to know the corresponding binding relationship between the optimal receive beam index(es) and the optimal receive beam(s) actually used, a field for indicating the optimal receive beam index(es) may be added to the UCI. For example, when there are 4 candidate receive beams, 2 bits are used to indicate the serial number of the optimal receive beam index(es).

In Sj-3, the terminal device directly acquires, through the output of the second network model, the transmit beam index(es) that should be adopted by the network side and the receive beam index(es) that should be adopted by the terminal side within the next F3 time units.

In Sj-4, the terminal device reports to the network device the optimal transmit beam(s) that should be adopted. The terminal device may instruct to the network device by adding an information field for indicating the optimal transmit beam index(es) in the UCI, and the network device performs transmission according to the transmit beam(s) corresponding to the optimal transmit beam index(es).

In Sj-5, the terminal device reports the L1-RSRP at the moment of the checkpoint, according to the Sj-0 configuration.

In Sj-6, the network side performs link quality check. The calculation way of link quality threshold and the value of X in the check process are determined by the network side. If the check is failed, the process Sj-7 to Sj-9 are triggered.

In Sj-7, the network device indicates that the link quality information check is failed through the DCI, and the fallback is required for beam sweeping.

In Sj-8, beam sweeping is performed within the fallback time, to reselect the optimal transmit beam(s) and the optimal receive beam(s).

In Sj-9, the terminal device reports the optimal transmit beam(s) and the corresponding L1-RSRP within the fallback time.

Specifically, the Sj-8 and Sj-9 processes are repeated until the next checkpoint.

When the AI model is deployed at the terminal side, the link quality measurement information and the optimal receive beam index(es) of the past K3 time units may also be adopted as the input of the second network model, to output the optimal receive beam index(es) that should be adopted within the next F3 time units, and link quality check and fallback beam sweeping may be achieved by reporting the L1-RSRP at the checkpoint.

It should be noted that the optimal transmit beam(s) and the optimal beam pair(s) being taken as the input of the second network model may achieve better compatibility with the beam management protocol.

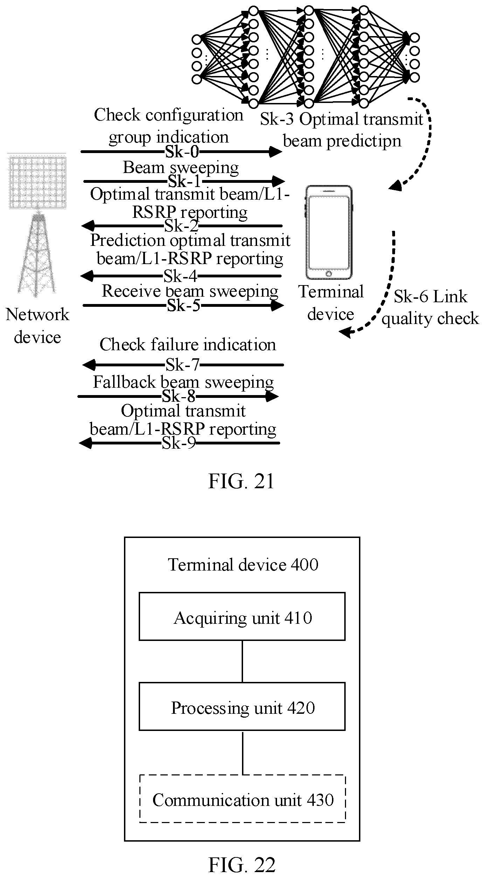

Embodiment XI, inference and prediction is performed based on the second network model at the terminal side, and check is performed at the terminal side. As illustrated in FIG. 21, the terminal side deploys the second network model, takes the link measurement information (L1-RSRP) and the optimal transmit beam(s) of the past K3 time units as the input, takes the optimal transmit beam(s) of the next F3 time units as the output, and implements check for the checkpoint at the terminal side. Specifically, check and prediction may be implemented Sk-0 to Sk-9.

In Sk-0, the network device instructs the checkpoint configuration to the terminal device through the MAC CE or DCI. Specifically, the check configuration group {q0,n} may have N pre-configured groups of configuration to form one check configuration group table, and is indicated by adding the indication field of log2 N bits in the MAC CE or DCI, for example, N=4 in above Table 1.

In Sk-1 and Sk-2, the Sk-1 and Sk-2 are performed within the measurement time of the K3 time units. The network device may directly acquire the transmit beam and the corresponding L1-RSRP within each time unit through beam sweeping process, and take as the input of the second network model.

In Sk-3, the terminal device predicts the optimal transmit beam(s) and corresponding L1-RSRP of the next F3 time units through the second network model.

In Sk-4, the terminal device reports the prediction results, that is, the optimal transmit beam(s) and the corresponding L1-RSRP of the F3 time units, to the network device.

In Sk-5, thus, the Sk-5 is performed within the next F3 time units to determine the optimal receive beam(s) at the terminal side. Specifically, the network device may trigger a periodic terminal device receive beam sweeping process (P3 process): transmitting a CSI-RS resource set whose repetitions are set to ON, that is, all CSI-RS resources in the CSI-RS resource set are transmitted by using the transmit beam of the f-th moment predicted by the second network model. The terminal device measures the CSI-RSs through different receive beams and selects the optimal receive beam.

In Sk-6, the terminal device locally implements check for the link quality. The calculation way of link quality threshold and the value of X in the check process are configured by the network side indication. Optionally, since the terminal device may also acquire the link quality information of the past K3 time units, the link quality threshold and the value of X may also be determined by the terminal device.

In Sk-7, the terminal device reports the link quality information check failure indication through the UCI, and the fallback is required for beam sweeping.

In Sk-8, beam sweeping is performed within the fallback time, to reselect the optimal transmit beam(s) and the optimal receive beam(s).

In Sk-9, the terminal device reports the optimal transmit beam(s) and the corresponding L1-RSRP within the fallback time.

Specifically, the Sk-8 and Sk-9 processes are repeated until the next checkpoint.

Embodiment XII, inference and prediction is performed based on the second network model at the terminal side, and check is performed at the terminal side. The terminal side deploys the second network model, takes the link measurement information (L1-RSRP) and the optimal beam pair(s) of the past K3 time units as the input, takes the optimal beam pair(s) of the next F3 time units as the output, and implements check for the checkpoint at the terminal side. Specifically, check and prediction may be implemented through the following Sl-0 to Sl-8.

In Sl-0, the network device instructs the checkpoint configuration to the terminal device through the MAC CE or DCI. Specifically, the check configuration group {q0,n} may have N pre-configured groups of configuration to form one check configuration group table, and is indicated by adding the indication field of log2 N bits in the MAC CE or DCI, for example, N=4 in above Table 1.

In Sl-1 and Sl-2, the Sl-1 and Sl-2 are performed within the measurement time of the K3 time units. The network device may directly acquire the transmit beam and the corresponding L1-RSRP within each time unit through beam sweeping process. Since the beam management does not support that the terminal device reports the optimal receive beam(s), that is, the optimal beam selection of the terminal device is transparent to the network device, it is necessary to report the optimal receive beam index(es) in the Sl-1 process to support the network device to acquire the optimal beam pair index(es). Since the network side is only necessary to know the serial number of the receive beam index(es) reported by the terminal device, and is not necessary to know the corresponding binding relationship between the optimal receive beam index(es) and the optimal receive beam(s) actually used, a field for indicating the optimal receive beam index(es) may be added to the UCI. For example, when there are 4 candidate receive beams, 2 bits are used to indicate the serial number of the optimal receive beam index(es).

In Sl-3, the terminal device directly acquires, through the output of the second network model, the transmit beam index(es) that should be adopted by the network side and the receive beam index(es) that should be adopted by the terminal side within the next F3 time units.

In Sl-4, the terminal device instructs to the network device the optimal transmit beam(s) that should be adopted. The terminal device may instruct to the network device by adding an information field for indicating the optimal transmit beam index(es) in the UCI, and the network device performs transmission according to the transmit beam(s) corresponding to the optimal transmit beam index(es).

In Sl-5, the terminal device locally implements check for the link quality, according to the Sl-0 configuration. The calculation way of link quality threshold and the value of X in the check process are configured by the network side indication. Optionally, since the terminal device may also acquire the link quality information of the past K3 time units, the link quality threshold and the value of X may also be determined by the terminal device.

In Sl-6, the terminal device reports the link quality information check failure indication through the UCI, and the fallback is required for beam sweeping.

In Sl-7, beam sweeping is performed within the fallback time, to reselect the optimal transmit beam(s) and the optimal receive beam(s).

In Sl-8, the terminal device reports the optimal transmit beam(s) and the corresponding L1-RSRP within the fallback time.

Specifically, the Sl-7 and Sl-8 processes are repeated until the next checkpoint.

Embodiment XII, inference and prediction is performed based on the second network model at the terminal side, and check is performed at the network side. In the link quality check-based dynamic beam management fallback mechanism, the link measurement information (L1-RSRP) and the optimal transmit beam(s) of the past K3 time units are taken as the input, the optimal transmit beam(s) of the next F3 time units is/are taken the output, and check for the checkpoint is implemented at the network side. Specifically, check and prediction may be implemented through the following Sm-0 to Sm-10.

In Sm-0, the network device instructs the checkpoint configuration to the terminal device through the MAC CE or DCI. Specifically, the check configuration group {q0, n} may be dynamically configured based on the mobility of the terminal device, or dynamically configured based on the check results within the plurality of past time units.

In Sm-1 and Sm-2, the Sm-1 and Sm-2 are performed within the measurement time of the K3 time units. The network device may directly acquire the transmit beam and the corresponding L1-RSRP within each time unit through beam sweeping process, and take as the input of the second network model.

In Sm-3, the terminal device predicts the optimal transmit beam(s) and corresponding L1-RSRP of the next F3 time units through the second network model.

In Sm-4, the terminal device reports the prediction results, that is, the optimal transmit beam(s) and the corresponding L1-RSRP of the F3 time units, to the network device.

In Sm-5, thus, the Sm-5 is performed within the next F3 time units to determine the optimal receive beam(s) at the terminal side. Specifically, the network device may trigger a periodic terminal device receive beam sweeping process (P3 process): transmitting a CSI-RS resource set whose repetitions are set to ON, that is, all CSI-RS resources in the CSI-RS resource set are transmitted by using the transmit beam of the f-th moment predicted by the second network model. The terminal device measures the CSI-RSs through different receive beams and selects the optimal receive beam.

In Sm-6, the network side performs link quality check. The calculation way of link quality threshold and the value of X in the check process are determined by the network side, and the network device dynamically updates the measurement time and prediction time according to the check result, so as to determine the updated input of the first network model.

In Sm-7, the network device instructs to the terminal device whether the check is successful or failed. When the check is failed, the fallback time is arrived and the check configuration group {q0, n} indication is updated after the fallback beam sweeping is finished. When the check is successful, the check configuration group {q0, n} indication is directly updated. Finally, dynamical updating of the measurement time and the prediction time are finished in the above two cases, and the optimal transmit beam prediction is re-performed by using the second network model at the terminal side.

In Sm-8, when the check is failed, beam sweeping is performed within the fallback time, to reselect the optimal transmit beam(s) and the optimal receive beam(s). When the check is successful, the check configuration group {q0,n} indication is directly updated.

In Sm-9, the terminal device reports the optimal transmit beam(s) and the corresponding L1-RSRP within the fallback time.

In Sm-10, the network device updates the check configuration group {q0, n} indication after the fallback beam sweeping is finished.

It should be noted that inference and prediction is performed based on the second network model at the terminal side, and check is performed at the terminal side. In the link quality check-based dynamic beam management fallback mechanism, the link measurement information (L1-RSRP) and the optimal beam pair(s) of the past K3 time units are taken as the input, the optimal beam pair(s) of the next F3 time units is/are taken the output, and check for the checkpoint is implemented at the terminal side. The specific processes may be referred to the above embodiments and will not be described in detail here.

Therefore, in the embodiments of the present disclosure, the terminal device implements time domain prediction of spatial filter based on the second network model, as well as checks predicted spatial filters based on link quality and determines spatial filters to be used by means of spatial filter sweeping within a certain period of time after the check is failed, so as to achieve real-time monitoring on link quality based on AI model prediction, ensure performance of matched spatial filters between the network device and the terminal device. As such, while reducing overhead of spatial filter measurement and feedback required for spatial filter tracking during movement of the terminal device and reducing switching delay between the spatial filters, stability of the link quality is ensured. In this way, degradation on spatial filter quality caused by prediction errors of the AI model is avoided, and better performance of the time domain prediction of the spatial filter is achieved.

The method embodiments of the present disclosure are described in detail with reference to FIGS. 8 to 21 above, and device embodiments of the present disclosure will be described in detail with reference to FIGS. 22 to 26 below. It should be understood that the device embodiments and the method embodiments correspond to each other, and similar descriptions may be made with reference to the method embodiments.

FIG. 22 illustrates a schematic block diagram of a network device 400 in accordance with the embodiments of the present disclosure. As illustrated in FIG. 22, the network device 400 includes an acquiring unit 410 and a processing unit 410.

The acquiring unit 410 is configured to acquire a first data set, where the first data set includes identification information of spatial filters of K1 time units and link quality information of K1 time units, K1 being a positive integer.

The processing unit 420 is configured to input the first data set into a first network model, to output first prediction information, where the first prediction information includes identification information of spatial filters of F1 time units and link quality information of F1 time units, and at least one checkpoint is set within the F1 time units, F1 being a positive integer.

The processing unit 420 is further configured to determine, according to a link quality check result of a first checkpoint, whether to use spatial filters output by the first network model within n time units after the first checkpoint, where the first checkpoint belongs to the at least one checkpoint, n being a positive integer and n<F1.

In some embodiments, the spatial filters include an optimal transmitting spatial filter; or the spatial filters include an optimal transmitting spatial filter and an optimal receiving spatial filter.

In some embodiments, different checkpoints are separated by the n time units in a case where a number of the at least one checkpoint is greater than or equal to 2.

In some embodiments, the processing unit 420 is specifically configured to:

use the spatial filters output by the first network model within the n time units after the first checkpoint in a case where a link quality check for the first checkpoint is successful; and/or

determine spatial filters to be used by means of spatial filter sweeping within the n time units after the first checkpoint in a case where a link quality check for the first checkpoint is failed.

In some embodiments, after a check for the first checkpoint is terminated, the processing unit 420 is further configured to update the first data set according to the link quality check result of the first checkpoint.

The processing unit 420 is further configured to input a updated first data set into the first network model, to output updated first prediction information, and determine a updated first checkpoint within updated F1 time units included in the updated first prediction information.

The processing unit 420 is further configured to determine, according to a link quality check result of the updated first checkpoint, whether to use the spatial filters output by the first network model within n time units after the updated first checkpoint within the updated F1 time units.

In some embodiments, in a case where a link quality check for the first checkpoint is successful, updated K1 time units included in the updated first data set include m time units within the F1 time units, and the updated K1 time units do not include first m time units within the K1 time units, and the updated first checkpoint is located at an m-th time unit within the updated F1 time units; and/or

in a case where a link quality check for the first checkpoint is failed, updated K1 time units included in the updated first data set include m+n time units within the F1 time units, and the updated K1 time units do not include first m+n time units within the K1 time units, and the updated first checkpoint is located at an m+n-th time unit within the updated F1 time unit.

Where the m time units within the F1 time units are a time unit to which the first checkpoint belongs and time units before the time unit to which the first check point belongs, within the F1 time units, m being a positive integer.

In some embodiments, a starting position of the first checkpoint and a value of n are dynamically configured by the network device based on mobility of a terminal device, or a starting position of the first checkpoint and a value of n are dynamically configured by the network device based on check results within a plurality of past time units.

In some embodiments, a starting position of the at least one checkpoint and a value of n are configured by the network device, or a starting position of the at least one checkpoint and a value of n are agreed upon by a protocol.

In some embodiments, a starting position of the at least one checkpoint and a value of n are determined by the network device or a terminal device based on a check configuration group.

Where the check configuration group includes a plurality of check configuration types, and each of the plurality of check configuration types corresponds to a starting position of a checkpoint and a way of assigning value to n.

In some embodiments, the check configuration group is agreed upon by a protocol, or the check configuration group is pre-configured by the network device.

In some embodiments, the link quality check result of the first checkpoint is determined based on link quality information of the first checkpoint and a link quality threshold.

The link quality information of the first checkpoint is: link quality information measured by a terminal device using an optimal receiving spatial filter corresponding to the first checkpoint responsive to that the network device transmits a reference signal using an optimal transmitting spatial filter corresponding to the first checkpoint.

In some embodiments, a link quality check for the first checkpoint is successful in a case where the link quality information of the first checkpoint is greater than or equal to the link quality threshold; and/or

a link quality check for the first checkpoint is failed in a case where the link quality information of the first checkpoint is less than the link quality threshold.

In some embodiments, the link quality check result of the first checkpoint is determined by the network device based on the link quality information of the first checkpoint and the link quality threshold reported by the terminal device; or the link quality check result of the first checkpoint is determined by the terminal device based on the link quality information of the first checkpoint and the link quality threshold, and reported to the network device.

In some embodiments, the link quality threshold is determined based on an average value or a weighted average value of the link quality information of the K1 time units.

In some embodiments, the link quality threshold is determined based on the following formula:

$$r\_th = (Q_1 + Q_2 + ... + Q_{K1})/K1 - X.$$

Where r_th represents the link quality threshold; $Q_1$ to $Q_{K1}$ represent the link quality information of the K1 time units, respectively; and X represents a link quality threshold offset value.

In some embodiments, the link quality threshold is determined based on the following formula:

$$r\_th = (a_1*Q_1 + a_2*Q_2 + ... + a_{K1}*Q_{K1})/K1 - X.$$

Where r_th represents the link quality threshold; $Q_1$ to $Q_{K1}$ represent the link quality information of the K1 time units, respectively; $a_1$ to $a_{K1}$ represent weighted weights of the K1 time units, respectively, and $a_1+a_2+...+a_{K1}=1$; and X represents a link quality threshold offset value.

In some embodiments, $a_1 <= a_2 <= ... <= a_{K1}$.

In some embodiments, a value of X is determined based on channel quality.

In some embodiments, a value of X is configured by the network device, or a value of X is configured by the terminal device.

In some embodiments, the link quality threshold is agreed upon by a protocol, or the link quality threshold is configured by the network device.

In some embodiments, the optimal receiving spatial filter corresponding to the first checkpoint is determined by the terminal device based on the optimal transmitting spatial filter corresponding to the first checkpoint, or the optimal receiving spatial filter corresponding to the first checkpoint is instructed to the terminal device by the network device.

In some embodiments, in a case where a link quality check for the first checkpoint is failed, the network device 400 further includes a communication unit 430.

The communication unit 430 is configured to transmit first indication information, where the first indication information is used for indicating that a terminal device determines spatial filters to be used by means of spatial filter sweeping within the n time units after the first checkpoint.

In some embodiments, in a case where the spatial filters include an optimal transmitting spatial filter, the first data set is acquired by the network device by means of spatial filter sweeping; or
in a case where the spatial filters include an optimal transmitting spatial filter and an optimal receiving spatial filter, the first data set is acquired by the network device based on identification information of optimal receiving spatial filters reported by a terminal device, and optimal transmitting spatial filters determined by means of spatial filter sweeping.

In some embodiments, the acquiring unit 410 is further configured to acquire a second data set; where the second data set includes at least one of: identification information of spatial filters of K2 time units, link quality information of K2 time units, identification information of spatial filters of F2 time units, or link quality information of F2 time units, K2 and F2 being positive integers.

The processing unit 420 is further configured to perform training on the first network model according to the second data set, to obtain model parameters of the first network model.

In some embodiments, the network device 400 further includes the communication unit 430.

The communication unit 430 is configured to receive model parameter information of a trained first network model.

In some embodiments, the above communication unit may be a communication interface or a transceiver, or an input/output interface of a communication chip or a system-on-chip. The processing unit may be one or more processors.

It should be understood that the network device 400 in accordance with embodiments of the present disclosure may correspond to the network device in the method embodiments of the present disclosure, and the above and other operations and/or functions of each unit in the network device 400 are intend to implement the corresponding processes of the network device in the method 200 illustrated in FIG. 8, respectively, which will not be repeated here for the sake of brevity.

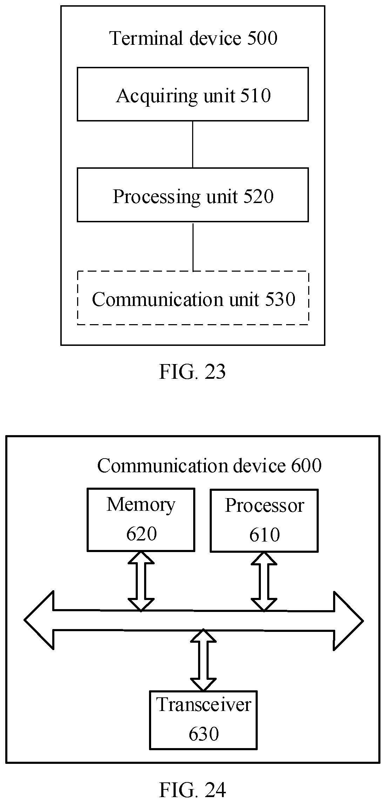

FIG. 23 illustrates a schematic block diagram of a terminal device 500 in accordance with the embodiments of the present disclosure. As illustrated in FIG. 23, the terminal device 500 includes an acquiring unit 510 and a processing unit 510.

The acquiring unit 510 is configured to acquire a third data set, where the third data set includes identification information of spatial filters of K3 time units and link quality information of K3 time units, K3 being a positive integer.

The processing unit 520 is configured to input the third data set into a second network model, to output second prediction information, where the second prediction information includes identification information of spatial filters of F3 time units and link quality information of F3 time units, and at least one checkpoint is set within the F3 time units, F3 being a positive integer.

The processing unit 520 is further configured to determine, according to a link quality check result of a first checkpoint, whether to use spatial filters output by the second network model within n time units after the first checkpoint, where the first checkpoint belongs to the at least one checkpoint, n being a positive integer and n<F3.

In some embodiments, the spatial filters include an optimal receiving spatial filter; or the spatial filters include an optimal transmitting spatial filter; or the spatial filters include an optimal transmitting spatial filter and an optimal receiving spatial filter.

In some embodiments, different checkpoints are separated by the n time units in a case where a number of the at least one checkpoint is greater than or equal to 2.

In some embodiments, the processing unit 520 is specifically configured to:

use the spatial filters output by the second network model within the n time units after the first checkpoint in a case where a link quality check for the first checkpoint is successful; and/or
determine spatial filters to be used by means of spatial filter sweeping within the n time units after the first checkpoint in a case where a link quality check for the first checkpoint is failed.

In some embodiments, after a check for the first checkpoint is terminated, the processing unit 520 is further configured to update the third data set according to the link quality check result of the first checkpoint.

The processing unit 520 is further configured to input a updated third data set into the second network model, to output updated second prediction information, and determine a updated first checkpoint within updated F3 time units included in the updated second prediction information.

The processing unit 520 is further configured to determine, according to a link quality check result of the updated first checkpoint, whether to use the spatial filters output by the second network model within n time units after the updated first checkpoint within the updated F3 time units.

In some embodiments, in a case where a link quality check for the first checkpoint is successful, updated K3 time units included in the updated third data set include m time units within the F3 time units, and the updated K3 time units do not include first m time units within the K3 time units, and the updated first checkpoint is located at an m-th time unit within the updated F3 time units; and/or

in a case where a link quality check for the first checkpoint is failed, updated K3 time units included in the updated third data set include m+n time units within the F3 time units, and the updated K3 time units do not include first m+n time units within the K3 time units, and the updated first checkpoint is located at an m+n-th time unit within the updated F3 time units.

Where the m time units within the F3 time units are a time unit to which the first checkpoint belongs and time units before the time unit to which the first checkpoint belongs, within the F3 time units, m being a positive integer.

In some embodiments, a starting position of the first checkpoint and a value of n are dynamically configured by a network device based on mobility of the terminal device, or a starting position of the first checkpoint and a value of n are dynamically configured by the terminal device based on check results within a plurality of past time units.

In some embodiments, a starting position of the at least one checkpoint and a value of n are configured by a network device, or a starting position of the at least one checkpoint and a value of n are agreed upon by a protocol.

In some embodiments, a starting position of the at least one checkpoint and a value of n are determined by a network device or the terminal device based on a check configuration group.

Where the check configuration group includes a plurality of check configuration types, and each of the plurality of check configuration types corresponds to a starting position of a checkpoint and a way of assigning value to n.

In some embodiments, the check configuration group is agreed upon by a protocol, or the check configuration group is pre-configured by a network device.

In some embodiments, the link quality check result of the first checkpoint is determined based on link quality information of the first checkpoint and a link quality threshold.

The link quality information of the first checkpoint is: link quality information measured by the terminal device using an optimal receiving spatial filter corresponding to the first checkpoint responsive to that a network device transmits a reference signal using an optimal transmitting spatial filter corresponding to the first checkpoint.

In some embodiments, a link quality check for the first checkpoint is successful in a case where the link quality information of the first checkpoint is greater than or equal to the link quality threshold; and/or

a link quality check for the first checkpoint is failed in a case where the link quality information of the first checkpoint is less than the link quality threshold.

In some embodiments, the link quality check result of the first checkpoint is determined by the network device based on the link quality information of the first checkpoint and the link quality threshold reported by the terminal device, and instructed to the terminal device; or

the link quality check result of the first checkpoint is determined by the terminal device based on the link quality information of the first checkpoint and the link quality threshold.

In some embodiments, the link quality threshold is determined based on an average value or a weighted average value of the link quality information of the K3 time units.

In some embodiments, the link quality threshold is determined based on the following formula:

$$r\_th = (Q_1 + Q_2 + \ldots + Q_{K3})/K3 - X.$$

Where r_th represents the link quality threshold; $Q_1$ to $Q_{K3}$ represent the link quality information of the K3 time units, respectively; and X represents a link quality threshold offset value.

In some embodiments the link quality threshold is determined based on the following formula:

$$r\_th = (a_1 * Q_1 + a_2 * Q_2 + \ldots + a_{K3} * Q_{K3})/K3 - X.$$

where r_th represents the link quality threshold; $Q_1$ to $Q_{K3}$ represent the link quality information of the K3 time units, respectively; $a_1$ to $a_{K3}$ represent weighted weights of the K3 time units, respectively, and $a_1 + a_2 + \ldots + a_{K3} = 1$; and X represents a link quality threshold offset value.

In some embodiments, $a_1 <= a_2 <= \ldots <= a_{K3}$.

In some embodiments, a value of X is determined based on channel quality.

In some embodiments, a value of X is configured by the network device, or a value of X is configured by the terminal device.

In some embodiments, the link quality threshold is agreed upon by a protocol, or the link quality threshold is configured by the network device.

In some embodiments, the optimal transmitting spatial filter corresponding to the first checkpoint is instructed to the terminal device by the network device.

In some embodiments, in a case where a link quality check for the first checkpoint is failed, the terminal device 500 further includes a communication unit 530.

The communication unit 530 is configured to transmit second indication information, where the second indication information is used for indicating that a network device determines spatial filters to be used by means of spatial filter sweeping within the n time units after the first checkpoint.

In some embodiments, in a case where the spatial filters include an optimal receiving spatial filter, the third data set is acquired by the terminal device by means of spatial filter sweeping; or

in a case where the spatial filters include an optimal transmitting spatial filter, the third data set is acquired by the terminal device from a network device; or

in a case where the spatial filters include an optimal transmitting spatial filter and an optimal receiving spatial filter, the third data set is acquired by the terminal device based on identification information of optimal transmitting spatial filters indicated by a network device, and optimal receiving spatial filters determined by means of spatial filter sweeping.

In some embodiments, the acquiring unit 510 is further configured to acquire a fourth data set; where the fourth data set includes at least one of: identification information of spatial filters of K4 time units, link quality information of K4 time units, identification information of spatial filters of F4 time units, or link quality information of F4 time units, K4 and F4 being positive integers.

The processing unit 520 is further configured to perform training on the second network model according to the fourth data set, to obtain model parameters of the second network model.

In some embodiments, the terminal device 500 further includes the communication unit 530.

The communication unit 530 is configured to model parameter information of a trained second network model.

In some embodiments, the above communication unit may be a communication interface or a transceiver, or an input-output interface on a communication chip or a system-on-chip. The above processing unit may be one or more processors.

It should be understood that the terminal device 500 according to the embodiments of the present disclosure may correspond to the terminal device in the method embodiments of the present disclosure, and the above and other operations and/or functions of each unit of the terminal device 500 are intend to implement the corresponding processes of the terminal device in the method 300 illustrated in FIG. 16, respectively, which will not be repeated here for the sake of brevity.

FIG. 24 is a schematic structural diagram of a communication device 600 provided according to the embodiments of the present disclosure. The communication device 600 illustrated in FIG. 24 includes a processor 610, and the processor 610 may call a computer program from a memory and run the computer program, to implement the method in the embodiments of the present disclosure.

In some embodiments, as illustrated in FIG. 24, the communication device 600 may also include a memory 620. Here, the processor 610 may call a computer program from the memory 620 and run the computer program, to implement the method in the embodiments of the present disclosure.

The memory 620 may be a separate device independent from the processor 610, or may be integrated into the processor 610.

In some embodiments, as illustrated in FIG. 24, the communication device 600 may also include a transceiver 630, and the processor 610 may control the transceiver 630 to communicate with other devices, and specifically, to transmit information or data to other devices, or receive information or data transmitted by the other devices.

The transceiver 630 may include a transmitter and a receiver. The transceiver 630 may further include antenna(s). There may be one or more antennas.

In some embodiments, the processor 610 may implement the functions of the processing unit in the terminal device, or the processor 610 may implement the functions of the processing unit in the network device, which will not be repeated here for the sake of brevity.

In some embodiments, the transceiver 630 may implement the functions of the communication unit in the terminal device, which will not be repeated here for the sake of brevity.

In some embodiments, the transceiver 630 may implement the functions of the communication unit in the network device, which will not be repeated here for the sake of brevity.

In some embodiments, the communication device 600 may be the network device of the embodiments of the present disclosure, and the communication device 600 may implement the corresponding processes implemented by the network device in various methods of the embodiments of the present disclosure, which will not be repeated here for the sake of brevity.

In some embodiments, the communication device 600 may be the terminal device of the embodiments of the present disclosure, and the communication device 600 may implement the corresponding processes implemented by the terminal device in various methods of the embodiments of the present disclosure, which will not be repeated here for the sake of brevity.

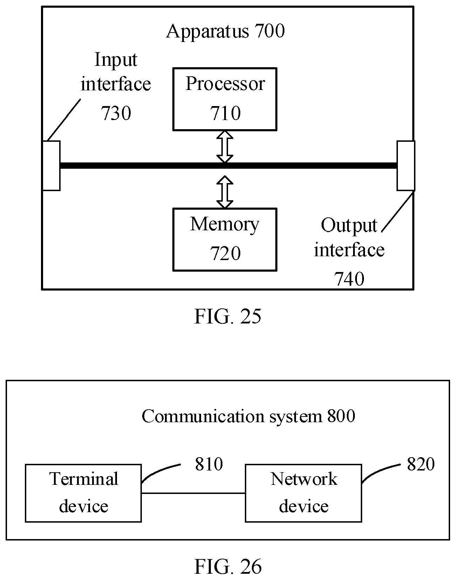

FIG. 25 is a schematic structural diagram of an apparatus according to the embodiments of the present disclosure. An apparatus 700 illustrated in FIG. 25 includes a processor 710, and the processor 710 may call a computer program from a memory and run the computer program, to implement the method in the embodiments of the present disclosure.

In some embodiments, as illustrated in FIG. 25, the apparatus 700 may also include a memory 720. Here, the processor 710 may call a computer program from the memory 720 and run the computer program, to implement the method in the embodiments of the present disclosure.

The memory 720 may be a separate device independent from the processor 710 or may be integrated into the processor 710.

In some embodiments, the apparatus 700 may further include an input interface 730. The processor 710 may control the input interface 730 to communicate with other devices or chips, and specifically, to obtain information or data transmitted by other devices or chips. Optionally, the processor 710 may be located on-chip or off-chip.

In some embodiments, the processor 710 may implement the functions of the processing unit in the terminal device, or the processor 710 may implement the functions of the processing unit in the network device, which will not be repeated here for the sake of brevity.

In some embodiments, the input interface 730 may implement the functions of the communication unit in the terminal device, or the input interface 730 may implement the functions of the communication unit in the network device.

In some embodiments, the apparatus 700 may further include an output interface 740. The processor 710 may control the output interface 740 to communicate with other devices or chip, and specifically, to output information or data to other devices or chips. Optionally, the processor 710 may be located on-chip or off-chip.

In some embodiments, the output interface 740 may implement the functions of the communication unit in the terminal device, or the output interface 740 may implement the functions of the communication unit in the network device.

In some embodiments, the apparatus may be applied to the network device in the embodiments of the present disclosure, and the apparatus may implement the corresponding processes implemented by the network device in various methods of the embodiments of the present disclosure, which will not be repeated here for the sake of brevity.

In some embodiments, the apparatus may be applied to the terminal device in the embodiments of the present disclosure, and the apparatus may implement the corresponding processes implemented by the terminal device in various methods of the embodiments of the present disclosure, which will not be repeated here for the sake of brevity.

In some embodiments, the apparatus mentioned in the embodiments of the present disclosure may also be a chip. For example, the chip may be a system-level chip, a system chip, a chip system or a system-on-chip.

FIG. 26 is a schematic block diagram of a communication system 800 provided according to the embodiments of the present disclosure. As illustrated in FIG. 26, the communication system 800 includes a terminal device 810 and a network device 820.

The terminal device 810 may be configured to implement the corresponding functions implemented by the terminal device in the above methods, or the network device 820 may be configured to implement the corresponding functions implemented by the network device in the above methods, which will not be repeated here for the sake of brevity.

It should be understood that the processor of the embodiments of the present disclosure may be an integrated circuit chip with signal processing capability. In the implementation process, each step of the above method embodiments may be completed by the instructions in the form of integrated logic circuit of hardware or software in the processor. The above processors may be a general purpose processor, a digital signal processor (DSP), an application specific integrated circuit (ASIC), a field programmable gate array (FPGA), other programmable logic device, a discrete gate, a transistor logic device, or a discrete hardware component, which may implement or execute the disclosed methods, steps and logic block diagrams in the embodiments of the present disclosure. The general purpose processor may be a microprocessor, or the processor may be any conventional processor, or the like. The steps of the methods disclosed in connection with the embodiments of the present disclosure may be directly embodied in the execution completion of the hardware decoding processor, or by the combination of the hardware and software modules in the decoding processor. The software module may be located in a random memory, a flash memory, a read-only memory, a programmable read-only memory, an electrically erasable programmable memory, a register or other mature storage media in the art. The storage medium is located in the memory, and the processor reads the information in the memory and completes the steps of the above method in combination with its hardware.

It will be understood that the memory in the embodiments of the present disclosure may be a volatile memory or a non-volatile memory, or may include both the volatile memory and non-volatile memory. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. As an example but not a limitation for illustration, many forms of the RAM are available, such as, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct Rambus random access memory (Direct Rambus RAM, DR RAM). It should be noted that the memory of the systems and methods described herein is intended to include, but is not limited to, these and any other suitable types of memories.

It should be understood that the above memory is exemplary but not limited illustration. For example, the memory in the embodiments of the present disclosure may also be a static random access memory (static RAM, SRAM), a dynamic random access memory (dynamic RAM, DRAM), a synchronous dynamic random access memory (synchronous DRAM, SDRAM)), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct Rambus random access memory (Direct Rambus RAM, DR RAM), etc. That is, the memory in the embodiments of the present disclosure is intended to include, but not limited to, these and any other suitable types of memories.

The embodiments of the present disclosure further provide a computer readable storage medium for storing a computer program.

In some embodiments, the computer readable storage medium may be applied to the network device in the embodiments of the present disclosure, and the computer program causes a computer to perform the corresponding processes implemented by the network device in various methods of the embodiments of the present disclosure, which will not be repeated here for the sake of brevity.

In some embodiments, the computer readable storage medium may be applied to the terminal device in the embodiments of the present disclosure, and the computer program causes a computer to perform the corresponding processes implemented by the terminal device in various methods of the embodiments of the present disclosure, which will not be repeated here for the sake of brevity.

The embodiments of the present disclosure further provide a computer program product, and the computer program product includes computer program instructions.

In some embodiments, the computer program product may be applied to the network device in the embodiments of the present disclosure, and the computer program instructions causes a computer to perform the corresponding processes implemented by the network device in various methods of the embodiments of the present disclosure, which will not be repeated here for the sake of brevity.

In some embodiments, the computer program product may be applied to the terminal device in the embodiments of the present disclosure, and the computer program instructions causes a computer to perform the corresponding processes implemented by the terminal device in various methods of the embodiments of the present disclosure, which will not be repeated here for the sake of brevity.

The embodiments of the present disclosure further provide a computer program.

In some embodiments, the computer program may be applied to the network device in the embodiment of the present disclosure, and the computer program, when running on a computer, causes the computer to perform the corresponding processes implemented by the network device in various methods of the embodiments of the present disclosure, which will not be repeated here for the sake of brevity.

In some embodiments, the computer program may be applied to the terminal device in the embodiment of the present disclosure, and the computer program, when running on a computer, causes the computer to perform the corresponding processes implemented by the terminal device in various methods of the embodiments of the present disclosure, which will not be repeated here for the sake of brevity.

Those of ordinary skill in the art will appreciate that the units and algorithm operations of each example described in connection with the embodiments disclosed herein may be implemented by electronic hardware, or by the combination of computer software and electronic hardware. Whether these functions are performed in hardware or software depends on the specific application and design constraints of the technical solutions. A professional technician may use different methods to implement the described functions for each specific application, but such implementation is not considered to be beyond the scope of the present disclosure.

Those skilled in the art may clearly understand that for the convenience and brevity of the description, the specific working processes of the system, apparatus and unit described above may refer to the corresponding procedures in the embodiments of the method above, and will not be repeated herein.

In several embodiments provided according to the present disclosure, it should be understood that the disclosed system, apparatus and method may be implemented in other ways. For example, the embodiments of the apparatus described above are only schematic, for example, the division of the unit is only a logical functional division, and there may be another division way in the actual implementation, for example, multiple units or components may be combined or integrated into another system, or some features may be ignored or not implemented. On the other aspect, the mutual coupling or direct coupling or communication connection illustrated or discussed may be indirect coupling or communication connection through some interfaces, apparatus or units, and may be electrical, mechanical or other forms.

The units described as separation parts may or may not be physically separated, and the component displayed as a unit may be or may not be a physical unit, that is, it may be located at one place, or it may be distributed to multiple network units. Some or all of the units may be selected according to actual requirements to achieve the purpose of the schemes of the embodiments.

In addition, various functional units in each embodiment of the present disclosure may be integrated into one processing unit, various units may exist physically alone, or two or more units may be integrated into one unit.

If the function is implemented in the form of a software functional unit and is sold or used as an independent product, it can be stored in a computer readable storage medium. Based on such an understanding, the technical solutions of the present disclosure, in essence or the part that contributes to the prior art or the part of the technical solutions, may be embodied in the form of a software product, the computer software product is stored in a storage medium, includes multiple instructions for making a computer device (which may be a personal computer, a server, a network device, etc.) to perform all or part of the steps of the method according to each embodiment of the present disclosure. The aforementioned storage media includes a media that may store a program code, such as a U disk, a mobile hard disk, a read-only memory (ROM), a random access memory (RAM), a disk or an optical disk.

The foregoing descriptions are merely specific implementations of the present disclosure, but the protection scope of the present disclosure is not limited thereto. Any skilled person in the art could readily conceive of changes or replacements within the technical scope of the present disclosure, which shall be all included in the protection scope of the present disclosure. Therefore, the protection scope of the present disclosure shall be subject to the protection scope of claims.

**Claims**

1. A wireless communication method, comprising:

    acquiring, by a network device, a first data set, wherein the first data set comprises identification information of spatial filters of K1 time units and link quality information of K1 time units, K1 being a positive integer;
    inputting, by the network device, the first data set into a first network model, to output first prediction information, wherein the first prediction information comprises identification information of spatial filters of F1 time units and link quality information of F1 time units, and at least one checkpoint is set within the F1 time units, F1 being a positive integer; and
    determining, by the network device according to a link quality check result of a first checkpoint, whether to use spatial filters output by the first network model within n time units after the first checkpoint, wherein the first checkpoint belongs to the at least one checkpoint, n being a positive integer and n<F1.

2. The method of claim 1, wherein the spatial filters comprise an optimal transmitting spatial filter; or the spatial filters comprise an optimal transmitting spatial filter and an optimal receiving spatial filter.

3. The method of claim 1 or 2, wherein different checkpoints are separated by the n time units in a case where a number of the at least one checkpoint is greater than or equal to 2.

4. The method of any one of claims 1 to 3, wherein determining, by the network device according to the link quality check result of the first checkpoint, whether to use the spatial filters output by the first network model within the n time units after the first checkpoint comprises:

   using, by the network device, the spatial filters output by the first network model within the n time units after the first checkpoint in a case where a link quality check for the first checkpoint is successful; and/or
   determining, by the network device, spatial filters to be used by means of spatial filter sweeping within the n time units after the first checkpoint in a case where a link quality check for the first checkpoint is failed.

5. The method of any one of claims 1 to 4, wherein after a check for the first checkpoint is terminated, the method further comprises:

   updating, by the network device, the first data set according to the link quality check result of the first checkpoint;
   inputting, by the network device, a updated first data set into the first network model, to output updated first prediction information, and determining a updated first checkpoint within updated F1 time units comprised in the updated first prediction information; and
   determining, by the network device according to a link quality check result of the updated first checkpoint, whether to use the spatial filters output by the first network model within n time units after the updated first checkpoint within the updated F1 time units.

6. The method of claim 5, wherein in a case where a link quality check for the first checkpoint is successful, updated K1 time units comprised in the updated first data set comprise m time units within the F1 time units, and the updated K1 time units do not comprise first m time units within the K1 time units, and the updated first checkpoint is located at an m-th time unit within the updated F1 time units; and/or

   in a case where a link quality check for the first checkpoint is failed, updated K1 time units comprised in the updated first data set comprise m+n time units within the F1 time units, and the updated K1 time units do not comprise first m+n time units within the K1 time units, and the updated first checkpoint is located at an m+n-th time unit within the updated F1 time unit;
   wherein the m time units within the F1 time units are a time unit to which the first checkpoint belongs and time units before the time unit to which the first check point belongs, within the F1 time units, m being a positive integer.

7. The method of claim 5 or 6, wherein a starting position of the first checkpoint and a value of n are dynamically configured by the network device based on mobility of a terminal device, or a starting position of the first checkpoint and a value of n are dynamically configured by the network device based on check results within a plurality of past time units.

8. The method of any one of claims 1 to 4, wherein a starting position of the at least one checkpoint and a value of n are configured by the network device, or a starting position of the at least one checkpoint and a value of n are agreed upon by a protocol.

9. The method of any one of claims 1 to 4, wherein a starting position of the at least one checkpoint and a value of n are determined by the network device or a terminal device based on a check configuration group; and wherein the check configuration group comprises a plurality of check configuration types, and each of the plurality of check configuration types corresponds to a starting position of a checkpoint and a way of assigning value to n.

10. The method of claim 9, wherein the check configuration group is agreed upon by a protocol, or the check configuration group is pre-configured by the network device.

11. The method of any one of claims 1 to 10, wherein the link quality check result of the first checkpoint is determined based on link quality information of the first checkpoint and a link quality threshold; and
wherein the link quality information of the first checkpoint is: link quality information measured by a terminal device using an optimal receiving spatial filter corresponding to the first checkpoint responsive to that the network device transmits a reference signal using an optimal transmitting spatial filter corresponding to the first checkpoint.

12. The method of claim 11, wherein a link quality check for the first checkpoint is successful in a case where the link quality information of the first checkpoint is greater than or equal to the link quality threshold; and/or
a link quality check for the first checkpoint is failed in a case where the link quality information of the first checkpoint is less than the link quality threshold.

13. The method of claim 11 or 12, wherein the link quality check result of the first checkpoint is determined by the network device based on the link quality information of the first checkpoint and the link quality threshold reported by the terminal device; or
the link quality check result of the first checkpoint is determined by the terminal device based on the link quality information of the first checkpoint and the link quality threshold, and reported to the network device.

14. The method of any one of claims 11 to 13, wherein the link quality threshold is determined based on an average value or a weighted average value of the link quality information of the K1 time units.

15. The method of claim 14, wherein the link quality threshold is determined based on the following formula:

$$r\_th = (Q_1 + Q_2 + ... + Q_{K1})/K1 - X;$$

wherein r_th represents the link quality threshold; $Q_1$ to $Q_{K1}$ represent the link quality information of the K1 time units, respectively; and X represents a link quality threshold offset value.

16. The method of claim 14, wherein the link quality threshold is determined based on the following formula:

$$r\_th = (a_1 * Q_1 + a2 * Q_2 + ... + a_{K1} * Q_{K1})/K1 - X;$$

wherein r_th represents the link quality threshold; $Q_1$ to $Q_{K1}$ represent the link quality information of the K1 time units, respectively; $a_1$ to $a_{K1}$ represent weighted weights of the K1 time units, respectively, and $a_1 + a_2 + ... + a_{K1} = 1$; and X represents a link quality threshold offset value.

17. The method of claim 16, wherein a, $<= a_2 <= ... <= a_{K1}$.

18. The method of any one of claims 15 to 17, wherein a value of X is determined based on channel quality.

19. The method of any one of claims 15 to 18, wherein a value of X is configured by the network device, or a value of X is configured by the terminal device.

20. The method of any one of claims 11 to 13, wherein the link quality threshold is agreed upon by a protocol, or the link quality threshold is configured by the network device.

21. The method of any one of claims 11 to 20, wherein the optimal receiving spatial filter corresponding to the first checkpoint is determined by the terminal device based on the optimal transmitting spatial filter corresponding to the first checkpoint, or the optimal receiving spatial filter corresponding to the first checkpoint is instructed to the terminal device by the network device.

22. The method of any one of claims 1 to 21, wherein in a case where a link quality check for the first checkpoint is failed, the method further comprises:
transmitting, by the network device, first indication information, wherein the first indication information is used for indicating that a terminal device determines spatial filters to be used by means of spatial filter sweeping within the n time units after the first checkpoint.

23. The method of any one of claims 1 to 22, wherein

in a case where the spatial filters comprise an optimal transmitting spatial filter, the first data set is acquired by the network device by means of spatial filter sweeping; or

in a case where the spatial filters comprise an optimal transmitting spatial filter and an optimal receiving spatial filter, the first data set is acquired by the network device based on identification information of optimal receiving spatial filters reported by a terminal device, and optimal transmitting spatial filters determined by means of spatial filter sweeping.

24. The method of any one of claims 1 to 23, further comprising:

acquiring, by the network device, a second data set; wherein the second data set comprises at least one of: identification information of spatial filters of K2 time units, link quality information of K2 time units, identification information of spatial filters of F2 time units, or link quality information of F2 time units, K2 and F2 being positive integers; and

performing, by the network device, training on the first network model according to the second data set, to obtain model parameters of the first network model.

25. The method of any one of claims 1 to 23, further comprising:
receiving, by the network device, model parameter information of a trained first network model.

26. A wireless communication method, comprising:

acquiring, by a terminal device, a third data set, wherein the third data set comprises identification information of spatial filters of K3 time units and link quality information of K3 time units, K3 being a positive integer;

inputting, by the terminal device, the third data set into a second network model, to output second prediction information, wherein the second prediction information comprises identification information of spatial filters of F3 time units and link quality information of F3 time units, and at least one checkpoint is set within the F3 time units, F3 being a positive integer; and

determining, by the terminal device according to a link quality check result of a first checkpoint, whether to use spatial filters output by the second network model within n time units after the first checkpoint, wherein the first checkpoint belongs to the at least one checkpoint, n being a positive integer and n<F3.

27. The method of claim 26, wherein the spatial filters comprise an optimal receiving spatial filter; or

the spatial filters comprise an optimal transmitting spatial filter; or

the spatial filters comprise an optimal transmitting spatial filter and an optimal receiving spatial filter.

28. The method of claim 26 or 27, wherein different checkpoints are separated by the n time units in a case where a number of the at least one checkpoint is greater than or equal to 2.

29. The method of any one of claims 26 to 28, wherein determining, by the terminal device according to the link quality check result of the first checkpoint, whether to use the spatial filters output by the second network model within the n time units after the first checkpoint comprises:

using, by the terminal device, the spatial filters output by the second network model within the n time units after the first checkpoint in a case where a link quality check for the first checkpoint is successful; and/or

determining, by the terminal device, spatial filters to be used by means of spatial filter sweeping within the n time units after the first checkpoint in a case where a link quality check for the first checkpoint is failed.

30. The method of any one of claims 26 to 29, wherein after a check for the first checkpoint is terminated, the method further comprises:

updating, by the terminal device, the third data set according to the link quality check result of the first checkpoint;

inputting, by the terminal device, a updated third data set into the second network model, to output updated second prediction information, and determining a updated first checkpoint within updated F3 time units comprised in the updated second prediction information; and

determining, by the terminal device according to a link quality check result of the updated first checkpoint, whether to use the spatial filters output by the second network model within n time units after the updated first checkpoint within the updated F3 time units.

31. The method of claim 30, wherein in a case where a link quality check for the first checkpoint is successful, updated K3 time units comprised in the updated third data set comprise m time units within the F3 time units, and the updated K3 time units do not comprise first m time units within the K3 time units, and the updated first checkpoint is located at an m-th time unit within the updated F3 time units; and/or

in a case where a link quality check for the first checkpoint is failed, updated K3 time units comprised in the updated third data set comprise m+n time units within the F3 time units, and the updated K3 time units do not comprise first m+n time units within the K3 time units, and the updated first checkpoint is located at an m+n-th time unit within the updated F3 time units;
wherein the m time units within the F3 time units are a time unit to which the first checkpoint belongs and time units before the time unit to which the first checkpoint belongs, within the F3 time units, m being a positive integer.

32. The method of claim 30 or 31, wherein a starting position of the first checkpoint and a value of n are dynamically configured by a network device based on mobility of the terminal device, or a starting position of the first checkpoint and a value of n are dynamically configured by the terminal device based on check results within a plurality of past time units.

33. The method of any one of claims 26 to 29, wherein a starting position of the at least one checkpoint and a value of n are configured by a network device, or a starting position of the at least one checkpoint and a value of n are agreed upon by a protocol.

34. The method of any one of claims 26 to 29, wherein a starting position of the at least one checkpoint and a value of n are determined by a network device or the terminal device based on a check configuration group; and
wherein the check configuration group comprises a plurality of check configuration types, and each of the plurality of check configuration types corresponds to a starting position of a checkpoint and a way of assigning value to n.

35. The method of claim 34, wherein the check configuration group is agreed upon by a protocol, or the check configuration group is pre-configured by a network device.

36. The method of any one of claims 26 to 35, wherein the link quality check result of the first checkpoint is determined based on link quality information of the first checkpoint and a link quality threshold; and
wherein the link quality information of the first checkpoint is: link quality information measured by the terminal device using an optimal receiving spatial filter corresponding to the first checkpoint responsive to that a network device transmits a reference signal using an optimal transmitting spatial filter corresponding to the first checkpoint.

37. The method of claim 36, wherein a link quality check for the first checkpoint is successful in a case where the link quality information of the first checkpoint is greater than or equal to the link quality threshold; and/or
a link quality check for the first checkpoint is failed in a case where the link quality information of the first checkpoint is less than the link quality threshold.

38. The method of claim 36 or 37, wherein the link quality check result of the first checkpoint is determined by the network device based on the link quality information of the first checkpoint and the link quality threshold reported by the terminal device, and instructed to the terminal device; or
the link quality check result of the first checkpoint is determined by the terminal device based on the link quality information of the first checkpoint and the link quality threshold.

39. The method of any one of claims 36 to 38, wherein the link quality threshold is determined based on an average value or a weighted average value of the link quality information of the K3 time units.

40. The method of claim 39, wherein the link quality threshold is determined based on the following formula:

$$r\_th = (Q_1 + Q_2 + \ldots + Q_{K3})/K3 - X;$$

wherein r_th represents the link quality threshold; $Q_1$ to $Q_{K3}$ represent the link quality information of the K3 time units, respectively; and X represents a link quality threshold offset value.

41. The method of claim 39, wherein the link quality threshold is determined based on the following formula:

$$r\_th = (a_1 * Q_1 + a_2 * Q_2 + ... + a_{K3} * Q_{K3})/K3 - X;$$

wherein r_th represents the link quality threshold; $Q_1$ to $Q_{K3}$ represent the link quality information of the K3 time units, respectively; $a_1$ to $a_{K3}$ represent weighted weights of the K3 time units, respectively, and $a_1 + a_2 + ... + a_{K3} = 1$; and X represents a link quality threshold offset value.

42. The method of claim 41, wherein $a_1 <= a_2 <= \cdots <= a_{K3}$.

43. The method of any one of claims 40 to 42, wherein a value of X is determined based on channel quality.

44. The method of any one of claims 40 to 43, wherein a value of X is configured by the network device, or a value of X is configured by the terminal device.

45. The method of any one of claims 36 to 38, wherein the link quality threshold is agreed upon by a protocol, or the link quality threshold is configured by the network device.

46. The method of any one of claims 36 to 45, wherein the optimal transmitting spatial filter corresponding to the first checkpoint is instructed to the terminal device by the network device.

47. The method of any one of claims 26 to 46, wherein in a case where a link quality check for the first checkpoint is failed, the method further comprises:
    transmitting, by the terminal device, second indication information, wherein the second indication information is used for indicating that a network device determines spatial filters to be used by means of spatial filter sweeping within the n time units after the first checkpoint.

48. The method of any one of claims 26 to 47, wherein

    in a case where the spatial filters comprise an optimal receiving spatial filter, the third data set is acquired by the terminal device by means of spatial filter sweeping; or
    in a case where the spatial filters comprise an optimal transmitting spatial filter, the third data set is acquired by the terminal device from a network device; or
    in a case where the spatial filters comprise an optimal transmitting spatial filter and an optimal receiving spatial filter, the third data set is acquired by the terminal device based on identification information of optimal transmitting spatial filters indicated by a network device, and optimal receiving spatial filters determined by means of spatial filter sweeping.

49. The method of any one of claims 26 to 48, further comprising:

    acquiring, by the terminal device, a fourth data set; wherein the fourth data set comprises at least one of: identification information of spatial filters of K4 time units, link quality information of K4 time units, identification information of spatial filters of F4 time units, or link quality information of F4 time units, K4 and F4 being positive integers; and
    performing, by the terminal device, training on the second network model according to the fourth data set, to obtain model parameters of the second network model.

50. The method of any one of claims 26 to 48, further comprising:
    receiving, by the terminal device, model parameter information of a trained second network model.

51. A network device, comprising:

    an acquiring unit, configured to acquire a first data set, wherein the first data set comprises identification information of spatial filters of K1 time units and link quality information of K1 time units, K1 being a positive integer;
    a processing unit, configured to input the first data set into a first network model, to output first prediction information, wherein the first prediction information comprises identification information of spatial filters of F1 time units and link quality information of F1 time units, and at least one checkpoint is set within the F1 time units, F1 being a positive integer; and

the processing unit, further configured to determine, according to a link quality check result of a first checkpoint, whether to use spatial filters output by the first network model within n time units after the first checkpoint, wherein the first checkpoint belongs to the at least one checkpoint, n being a positive integer and n<F1.

52. A terminal device, comprising:

an acquiring unit, configured to acquire a third data set, wherein the third data set comprises identification information of spatial filters of K3 time units and link quality information of K3 time units, K3 being a positive integer;

a processing unit, configured to input the third data set into a second network model, to output second prediction information, wherein the second prediction information comprises identification information of spatial filters of F3 time units and link quality information of F3 time units, and at least one checkpoint is set within the F3 time units, F3 being a positive integer; and

the processing unit, further configured to determine, according to a link quality check result of a first checkpoint, whether to use spatial filters output by the second network model within n time units after the first checkpoint, wherein the first checkpoint belongs to the at least one checkpoint, n being a positive integer and n<F3.

53. A terminal device, comprising: a processor and a memory, wherein the memory is configured to store a computer program, and the processor is configured to call the computer program stored in the memory and run the computer program, to cause the terminal device to perform the method of any one of claims 1 to 25.

54. A network device, comprising: a processor and a memory, wherein the memory is configured to store a computer program, and the processor is configured to call the computer program stored in the memory and run the computer program, to cause the network device to perform the method of any one of claims 26 to 50.

55. A chip, comprising: a processor, wherein the processer is configured to call a computer program from a memory and run the computer program, to cause a device equipped with the chip to perform the method of any one of claims 1 to 25.

56. A chip, comprising: a processor, wherein the processer is configured to call a computer program from a memory and run the computer program, to cause a device equipped with the chip to perform the method of any one of claims 26 to 50.

57. A computer-readable storage medium, configured to store a computer program, wherein the computer program, when executed, implements the method of any one of claims 1 to 25.

58. A computer-readable storage medium, configured to store a computer program, wherein the computer program, when executed, implements the method of any one of claims 26 to 50.

59. A computer program product, comprising: computer program instructions, wherein the computer program instructions, when executed, implement the method of any one of claims 1 to 25.

60. A computer program product, comprising: computer program instructions, wherein the computer program instructions, when executed, implement the method of any one of claims 26 to 50.

61. A computer program, wherein the computer program, when executed, implements the method of any one of claims 1 to 25.

62. A computer program, wherein the computer program, when executed, implement the device to perform the method of any one of claims 26 to 50.

**100**

FIG. 1

FIG. 2

FIG. 3

Input layer — Convolutional layer — Pooling layer — Convolutional layer — Pooling layer — Fully connected layer — Output layer

FIG. 4

FIG. 5

FIG. 6

FIG. 7

**200**

| |
|---|
| A network device acquires a first data set, where the first data set includes identification information of spatial filters of K1 time units and link quality information of K1 time units, K1 being a positive integer. |

S210

| |
|---|
| The network device inputs the first data set into a first network model, to output first prediction information, where the first prediction information includes identification information of spatial filters of F1 time units and link quality information of F1 time units, and at least one checkpoint is set within the F1 time units, F1 being a positive integer. |

S220

| |
|---|
| The network device determines, according to a link quality check result of a first checkpoint, whether to use spatial filters output by the first network model within n time units after the first checkpoint, where the first checkpoint belongs to the at least one checkpoint, n being a positive integer and n<F1. |

S230

FIG. 8

Measurement time    Prediction time

| K1 time units | F1 time units | K1 time units | F1 time units |
|---|---|---|---|

Check point 0, time q0

n time units

Check is successful

Check is failed

| K1 time units | n time units | K1 time units | F1 time units |
|---|---|---|---|

Fallback time

FIG. 9

Measurement time  Prediction time

| K1 time units | F1 time units | K1 time units | F1 time units |

Check point 0, time q0

n time units

Check is failed

Fallback time

Check is successful

Check is failed

| K1 time units | n time units |

| Updated K1 time units | Updated F1 time units |

Updated check point 0, time q0

| Updated K1 time units | Updated F1 time units |

Updated check point 0, time q0

FIG.10

```
┌───────────┐      ┌───────────┐           ┌───────────┐      ┌───────────┐
│ LSTM unit │─────▶│ LSTM unit │    ···    │ LSTM unit │─────▶│ LSTM unit │─────▶
└───────────┘      └───────────┘           └───────────┘      └───────────┘
      ▲                  ▲                       ▲                  ▲
```

Optimal transmit beam or beam pair index and L1-RSRP of past K-1 time unit

Optimal transmit beam or beam pair index and L1-RSRP of past K-2 time unit

Optimal transmit beam or beam pair index and L1-RSRP of past 1-st time unit

Optimal transmit beam or beam pair index and L1-RSRP of past 0-th time unit

Optimal transmit beam or beam pair indexes and L1-RSRP of next F time units

FIG. 11

Sa-3 Optimal transmit
beam prediction

Check configuration group
indication
———————Sa-0———————▶

Beam sweeping
———————Sa-1———————▶

Optimal transmit beam/L1-
RSRP reporting
◀———————Sa-2———————

UE receive beam sweeping
———————Sa-4———————▶

L1-RSRP of a checkpoint reporting
◀———————Sa-5———————

Sa-6 Link
quality check

Network
device

Check failure indication
———————Sa-7———————▶

Fallback beam sweeping
———————Sa-8———————▶

Optimal transmit beam/L1-
RSRP reporting
◀———————Sa-9———————

Terminal
device

FIG. 12

Sb-3 Optimal beam Pair
prediction

Check configuration group
indication
———————Sb-0———————▶

Beam Sweeping
———————Sb-1———————▶

Optimal transmit beam/optimal
receive beam/L1-RSRP reporting
———————Sb-2———————▶

Prediction optimal receive
beam indication
———————Sb-4———————▶

L1-RSRP of a checkpoint
reporting
◀———————Sb-5———————

Sb-6 Link quality
check

Network
device

Check failure indication
———————Sb-7———————▶

Fallback beam sweeping
———————Sb-8———————▶

Optimal transmit beam/L1-
RSRP reporting
◀———————Sb-9———————

Terminal
device

FIG. 13

Sc-3 Optimal transmit beam prediction

Check configuration group indication
—Sc-0—→

Beam sweeping
—Sc-1—→

Optimal transmit beam/L1-RSRP reporting
←—Sc-2—

UE receive beam sweeping
—Sc-4—→

Check failure indication
←—Sc-6—

Fallback beam sweeping
—Sc-7—→

Optimal transmit beam/L1-RSRP reporting
←—Sc-8—

Network device

Terminal device

Sc-5 Link quality check

FIG. 14

Se-3 Optimal transmit
beam prediction

Check configuration group
indication
————Se-0————→

Beam sweeping
————Se-1————→

Optimal transmit
beam/L1-RSRP reporting
←————Se-2————

UE receive beam sweeping
————Se-4————→

L1-RSRP reporting prior to
a checkpoint
←————Se-5————

S6 Link quality
check

Network
device

Check success/failure
indication
————Se-7————→

Terminal
device

Check is failed

Check is successful

Network
device

Fallback beam sweeping
————Se-8————→

Optimal transmit beam/L1-
RSRP reporting
←————Se-9————

Update check configuration
group indication
————Se-10————→

Terminal
device

Network
device

Update check
configuration group
indication
————Se-8————→

Terminal
device

Se-3 Optimal transmit beam
prediction

FIG. 15

**300**

| | |
|---|---|
| A terminal device acquires a third data set, where the third data set includes identification information of spatial filters of K3 time units and link quality information of K3 time units, K3 being a positive integer. | S310 |

| | |
|---|---|
| The terminal device inputs the third data set into a second network model, to output second prediction information, where the second prediction information includes identification information of spatial filters of F3 time units and link quality information of F3 time units, and at least one checkpoint is set within the F3 time units, F3 being a positive integer. | S320 |

| | |
|---|---|
| The terminal device determines, according to a link quality check result of a first checkpoint, whether to use spatial filters output by the second network model within n time units after the first checkpoint, where the first checkpoint belongs to the at least one checkpoint, n being a positive integer and n < F3. | S330 |

FIG.16

Measurement time    Prediction time

| K3 time units | F3 time units | K3 time units | F3 time units |
|---|---|---|---|

Check point 0, time q0

n time units

Check is failed        Check is successful

| K3 time units | n time units | K3 time units | F3 time units |
|---|---|---|---|

Fallback time

FIG. 17

Measurement time   Prediction time

| K3 time units | F3 time units | K3 time units | F3 time units |
|---|---|---|---|

Check point 0, time q0

n time units
Fallback time

Check is failed

| K3 time units | | n time units | |
|---|---|---|---|

Check is failed

| | Updated K3 time units | Updated F3 time units |
|---|---|---|

Updated check point 0, time q0

Check is successful

| | Updated K3 time units | Updated F3 time units |
|---|---|---|

Updated check point 0, time q0

FIG. 18

Check configuration group
indication
Si-0

Beam sweeping
Si-1

Optimal transmit beam/L1-
RSRP reporting
Si-2

Prediction optimal transmit
beam/L1-RSRP reporting
Si-4

UE receive beam sweeping
Si-5

L1-RSRP of a checkpoint
reporting
Si-6

Check failure indication
Si-8

Fallback beam sweeping
Si-9

Optimal transmit beam/L1-
RSRP reporting
Si-10

Si-3 Optimal
transmit beam
prediction

Si-7 Link
quality
check

Network
device

Terminal
device

FIG. 19

Check configuration
group indication
Sj-0

Beam sweeping
Sj-1

Optimal transmit beam/L1-
RSRP reporting
Sj-2

Prediction optimal transmit
beam/L1-RSRP indication
Sj-4

L1-RSRP of a checkpoint
reporting
Sj-5

Check failure indication
Sj-7

Fallback beam sweeping
Sj-8

Optimal transmit
beam/L1-RSRP reporting
Sj-9

Sj-3 Optimal transmit
beam prediction

Sj-6 Link
quality
check

Network
device

Terminal
device

FIG. 20

Check configuration Sk-3 Optimal transmit
group indication beam predictipn
────────Sk-0────────▶

Beam sweeping
────────Sk-1────────▶

Optimal transmit beam/L1-
RSRP reporting
◀────────Sk-2────────

Prediction optimal transmit
beam/L1-RSRP reporting
◀────────Sk-4────────

Receive beam sweeping
────────Sk-5────────▶

Sk-6 Link
quality check

Network device

Terminal device

Check failure indication
◀────────Sk-7────────

Fallback beam sweeping
────────Sk-8────────▶

Optimal transmit
beam/L1-RSRP reporting
◀────────Sk-9────────

FIG. 21

Terminal device 400

Acquiring unit 410

Processing unit 420

Communication unit 430

FIG. 22

Terminal device 500

Acquiring unit 510

Processing unit 520

Communication unit 530

FIG. 23

Communication device 600

Memory
620

Processor
610

Transceiver
630

FIG. 24

FIG. 25

FIG. 26

<div align="center">

**INTERNATIONAL SEARCH REPORT**

</div>

| International application No. |
| --- |
| **PCT/CN2022/103009** |

| **A.** | **CLASSIFICATION OF SUBJECT MATTER** |
| --- | --- |
| | H04L 27/00(2006.01)i |

According to International Patent Classification (IPC) or to both national classification and IPC

| **B.** | **FIELDS SEARCHED** |
| --- | --- |

Minimum documentation searched (classification system followed by classification symbols)

    IPC:H04L

Documentation searched other than minimum documentation to the extent that such documents are included in the fields searched

Electronic data base consulted during the international search (name of data base and, where practicable, search terms used)

    CNABS; CNTXT; CNKI; VEN; USTXT; EPTXT; WOTXT; IEEE; 3GPP: 波束, 参考信号, 预测, 估计, 回退, 监测, 检测, 空间关系, 滤波器, 空间设置, 链路质量, 模型, 神经网络, 时间, 时刻, 使用, 停止, 结果, beam, cqi, model, prediction, rsrp, use, result, reference signal, link quality, filter, stop, neural network

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | CN 112886996 A (BEIJING SAMSUNG COMMUNICATION TECHNOLOGY RESEARCH CO., LTD. et al.) 01 June 2021 (2021-06-01)<br>    description, paragraphs [0169]-[0288] | 1-62 |
| A | CN 112714486 A (BEIJING SAMSUNG COMMUNICATION TECHNOLOGY RESEARCH CO., LTD. et al.) 27 April 2021 (2021-04-27)<br>    entire document | 1-62 |
| A | US 2020366340 A1 (SAMSUNG ELECTRONICS CO., LTD.) 19 November 2020 (2020-11-19)<br>    entire document | 1-62 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 March 2023** | **24 March 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

| INTERNATIONAL SEARCH REPORT |  |  | International application No. |
| :---: | :---: | :---: | :---: |
| Information on patent family members |  |  | **PCT/CN2022/103009** |

| Patent document cited in search report | | | Publication date (day/month/year) | Patent family member(s) | | | Publication date (day/month/year) |
| --- | --- | --- | --- | --- | --- | --- | --- |
| CN | 112886996 | A | 01 June 2021 | None | | | |
| CN | 112714486 | A | 27 April 2021 | None | | | |
| US | 2020366340 | A1 | 19 November 2020 | EP | 3925086 | A1 | 22 December 2021 |
| | | | | EP | 3925086 | A4 | 20 April 2022 |
| | | | | KR | 20200132735 | A | 25 November 2020 |
| | | | | WO | 2020231193 | A1 | 19 November 2020 |

Form PCT/ISA/210 (patent family annex) (July 2022)